(19) **Europäisches Patentamt**
**European Patent Office**
**Office européen des brevets**

(11) **EP 4 787 802 A1**

(12) **EUROPEAN PATENT APPLICATION**
published in accordance with Art. 153(4) EPC

(43) Date of publication:
**05.08.2026 Bulletin 2026/32**

(21) Application number: **23955124.5**

(22) Date of filing: **11.10.2023**

(51) International Patent Classification (IPC):
**H04L 43/0864** *(2022.01)*  **H04W 74/08** *(2024.01)*

(52) Cooperative Patent Classification (CPC):
**H04L 43/0864; H04W 74/08**

(86) International application number:
**PCT/CN2023/124096**

(87) International publication number:
**WO 2025/076741 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **FENG, Qi**
**Shenzhen, Guangdong 518129 (CN)**
• **WANG, Fan**
**Shenzhen, Guangdong 518129 (CN)**

(74) Representative: **Körber, Martin Hans**
**Mitscherlich PartmbB**
**Karlstraße 7**
**80333 München (DE)**

(54) **COMMUNICATION METHOD AND APPARATUS**

(57) A communication method and apparatus are provided, to improve a sequence capacity and sequence configuration efficiency. The method includes: A network device sends first information to indicate $P$ candidate maximum round-trip times and $Q$ candidate maximum Doppler frequency shifts, where the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient, and $P$ and $Q$ are positive integers. A terminal device sends a first sequence, where the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the $Q$ candidate maximum Doppler frequency shifts. The network device receives the first sequence, and determines a round-trip time and/or a Doppler frequency shift of the terminal device based on the first sequence.

FIG. 2

**Description**

**TECHNICAL FIELD**

Embodiments of this application relate to the communication field, and in particular, to a communication method and apparatus.

**BACKGROUND**

In long term evolution (long term evolution, LTE) or new radio (new radio, NR) systems, Zadoff-Chu sequences (ZC sequences for short) are typically used for uplink random access.

For example, a base station configures a starting ZC root sequence number, a maximum round-trip time, and a maximum Doppler frequency shift via broadcast information. A terminal device sequentially determines 64 sequences according to a principle of traversing cyclic shifts first and then traversing root sequence numbers, and then selects one sequence from the 64 sequences for random access.

However, to withstand frequency offset in high-speed mobility scenarios of the terminal, a plurality of root sequence numbers may be needed to determine 64 sequences. Consequently, given a fixed total quantity of root sequence numbers, it is not possible to configure starting ZC root sequence numbers for more cells. In other words, sequence configuration efficiency in the foregoing solution is low.

**SUMMARY**

Embodiments of this application provide a communication method and apparatus, to improve a sequence capacity and sequence configuration efficiency.

According to a first aspect, a communication method is provided. The method may be performed by a terminal device, may be performed by a component of the terminal device, for example, a processor, a chip, or a chip system of the terminal device, or may be implemented by a logical module or software that can implement all or some functions of the terminal device. The method includes: receiving first information, where the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers; and sending a first sequence, where the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the $Q$ candidate maximum Doppler frequency shifts.

According to this solution, sequences in the $P \times Q$ sequence sets are cubic polynomial exponential sequences. According to this sequence design, a sequence capacity may be in direct proportion to the cube of a sequence length. In comparison with a ZC sequence, the sequence capacity is improved. In addition, a network device may indicate at least one candidate maximum round-trip time and at least one candidate maximum Doppler frequency shift, so that terminal devices at different locations and at different moving speeds in a cell may select an appropriate maximum round-trip time and an appropriate maximum Doppler frequency shift, to determine a sequence set and select a sequence from the sequence set. When a total quantity $M$ (for example, 64) of sequences needed for random access is fixed, because the network device performs division on maximum round-trip times and maximum Doppler frequency shifts, the $M$ sequences are distributed in the $P \times Q$ sequence sets. To be specific, it is determined that parameters of the $M$ sequences include the $P$ candidate maximum round-trip times, the $Q$ candidate maximum Doppler frequency shifts, and cubic term coefficients of the cubic polynomial exponential sequences. In other words, a same quantity of sequences may be determined by using values of a smaller quantity of cubic term coefficients, so that use of the cubic term coefficients can be reduced, and the network device can configure cubic term coefficients for more cells, to improve sequence configuration efficiency.

In a possible design, the method further includes: receiving a first signal, where the first maximum round-trip time is related to signal quality of the first signal.

In a possible design, the first maximum Doppler frequency shift is related to a moving speed of the terminal device.

According to the foregoing two possible designs, the terminal device may select a candidate maximum round-trip time and a candidate maximum Doppler frequency shift based on the signal quality and the moving speed of the terminal device, to improve sequence configuration efficiency.

According to a second aspect, a communication method is provided. The method may be performed by a network device, may be performed by a component of the network device, for example, a processor, a chip, or a chip system of the network device, or may be implemented by a logical module or software that can implement all or some functions of the network device. The method includes: sending first information, where the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers; receiving a first sequence from a terminal device, where the first sequence belongs to a first sequence set in the $P \times Q$ sequence sets, the first sequence set corresponds to a first maximum round-trip time and a first maximum Doppler frequency shift, the first maximum round-trip time is one of the P candidate maximum round-trip times, and the first maximum Doppler frequency shift is one of the Q candidate maximum Doppler frequency shifts; and determining a round-trip time and/or a Doppler frequency shift of the terminal device based on the first sequence. For technical effects brought by the second aspect, refer to the technical effects brought by the first aspect. Details are not described herein again.

With reference to the first aspect or the second aspect, in a possible design, low ambiguity zones corresponding to different sequence sets in the $P \times Q$ sequence sets do not overlap each other, and/or low ambiguity zones of different sequences in a same sequence set do not overlap each other.

With reference to the first aspect or the second aspect, in a possible design, sequences in different sequence sets in the $P \times Q$ sequence sets do not overlap each other.

According to the foregoing two possible designs, in the $P \times Q$ sequence sets, low ambiguity zones of sequences in different sequence sets do not overlap each other, sequences in different sequence sets do not overlap each other, and low ambiguity zones of different sequences in a same sequence set do not overlap each other, so that interference between terminal devices can be reduced, and a success rate of random access can be improved.

With reference to the first aspect or the second aspect, in a possible design, in the $P \times Q$ sequence sets, a cubic polynomial exponential sequence in a sequence set corresponding to a $p$th candidate maximum round-trip time $\Delta_{T,p}$ and a $q$th candidate maximum Doppler frequency shift $\Delta_{F,q}$ may be expressed as:

$$s_{p,q}(n) = e^{-j2\pi(\lambda n^3 + 3\lambda \bar{k}_p n^2 + \bar{l}_q n)/N}, \text{where } n = 0, 1, ..., N-1.$$

$\lambda$ is a cubic term coefficient of the cubic polynomial exponential sequence. $3\lambda\bar{k}_p$ is a quadratic term coefficient of the cubic polynomial exponential sequence. $\bar{l}_q$ is a monomial term coefficient of the cubic polynomial exponential sequence. A sequence length $N$ of the cubic polynomial exponential sequence is a prime number. $p \in \{1,2, ..., P\}$. $q \in \{1,2, ..., Q\}$. $\bar{k}_1 \neq \bar{k}_2 \neq \cdots \neq \bar{k}_P$. $\bar{l}_1 \neq \bar{l}_2 \neq \cdots \neq \bar{l}_Q$.

With reference to the first aspect or the second aspect, in a possible design, a quantity $\Omega_{p,q}$ of sequences included in each of the $P \times Q$ sequence sets is:

$$\Omega_{p,q} = R \cdot \left\lfloor N \middle/ \sum_{p=1}^{P} \Delta_{T,p} \right\rfloor \cdot \left\lfloor N \middle/ \sum_{q=1}^{Q} \Delta_{F,q} \right\rfloor.$$

$N$ represents the sequence length of the cubic polynomial exponential sequence. $\Delta_{T,p}$ represents the $p$th candidate maximum round-trip time. $\Delta_{F,q}$ represents the $q$th candidate maximum Doppler frequency shift. R represents a quantity of candidate cubic term coefficients. The operator $\lfloor \cdot \rfloor$ represents rounding down. The operator $\Sigma\cdot$ represents accumulation.

According to the possible design, because each of the $P \times Q$ sequence sets includes a same quantity of sequences, this design is applicable to a scenario in which maximum round-trip times and maximum Doppler frequency shifts that correspond to a plurality of terminal devices in a cell comply with uniform distribution. In this case, the terminal device selects any sequence set with a same probability, each sequence set includes a same quantity of sequences, and different terminal devices select a same sequence with a same probability.

With reference to the first aspect or the second aspect, in a possible design, the $\Omega_{p,q}$ cubic polynomial exponential sequences $s_{p,q}(n)$ included in the sequence set corresponding to the $p$th candidate maximum round-trip time $\Delta_{T,p}$ and the $q$th candidate maximum Doppler frequency shift $\Delta_{F,q}$ are expressed as:

$$s_{p,q}(n) = e^{-j2\pi[\lambda_r n^3 + 3\lambda_r(k\Delta_{T,p} + \lfloor N/\sum_{i=1}^{P}\Delta_{T,i}\rfloor \cdot \sum_{i=1}^{p}\Delta_{T,i})n^2 + (l\Delta_{F,q} + \lfloor N/\sum_{i=1}^{P}\Delta_{T,i}\rfloor \cdot \sum_{i=1}^{p}\Delta_{T,i})n]/N}, \text{where } n = 0, 1, ..., N-1.$$

The sequence length $N$ of the cubic polynomial exponential sequence is a prime number. $\lambda_r \in \{1, 2, ..., N-1\}$. $r \in \{1, 2, ..., R\}$. $\lambda_1 \neq \lambda_2 \neq \cdots \neq \lambda_R$.

$3\lambda_r\left(k\Delta_{T,p} + \lfloor N/\sum_{i=1}^{P}\Delta_{T,i}\rfloor \cdot \sum_{i=1}^{p}\Delta_{T,i}\right)$ is a quadratic term coefficient of the cubic polynomial exponential sequence.

$$k \in \left\{0, 1, \dots, \left\lfloor N / \sum_{i=1}^{P} \Delta_{\mathrm{T},i} \right\rfloor - 1 \right\}.$$ $\left( l\Delta_{\mathrm{F},q} + \left\lfloor N / \sum_{i=1}^{P} \Delta_{\mathrm{T},i} \right\rfloor \cdot \sum_{i=1}^{p} \Delta_{\mathrm{T},i} \right)$ is a monomial term coefficient of the cubic polynomial exponential sequence. $l \in \left\{0, 1, \dots, \left\lfloor N / \sum_{i=1}^{Q} \Delta_{\mathrm{F},i} \right\rfloor - 1 \right\}.$

With reference to the first aspect or the second aspect, in a possible design, in the $P \times Q$ sequence sets, a quantity $\Omega_{p,q}$ of sequences included in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ is:

$$\Omega_{p,q} = R \cdot \left\lfloor N / P\Delta_{\mathrm{T},p} \right\rfloor \cdot \left\lfloor N / Q\Delta_{\mathrm{F},q} \right\rfloor.$$

$N$ represents the sequence length of the cubic polynomial exponential sequence. $R$ represents a quantity of candidate cubic term coefficients. $p \in \{1, 2, \dots, P\}$. $q \in \{1, 2, \dots, Q\}$. The operator $\lfloor \cdot \rfloor$ represents rounding down.

With reference to the first aspect or the second aspect, in a possible design, each of the $P \times Q$ sequence sets corresponds to a same total area of low ambiguity zones.

The foregoing two possible designs are applicable to a scenario in which maximum round-trip times and maximum Doppler frequency shifts that correspond to a plurality of terminal devices in a cell comply with exponential distribution. In this case, the terminal device selects, with a high probability, a sequence set with a small maximum round-trip time and a small maximum Doppler frequency shift, the sequence set with a small maximum round-trip time and a small maximum Doppler frequency shift includes a large quantity of sequences, and different terminal devices select a same sequence with close probabilities.

With reference to the first aspect or the second aspect, in a possible design, the $\Omega_{p,q}$ cubic polynomial exponential sequences $s_{p,q}(n)$ included in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ are expressed as:

$$s_{p,q}(n) = e^{-j2\pi[\lambda_r n^3 + 3\lambda_r(k\Delta_{\mathrm{T},p} + \lfloor N/P \rfloor \cdot p - \lfloor N/P \rfloor)n^2 + (l\Delta_{\mathrm{F},q} + \lfloor N/Q \rfloor \cdot q - \lfloor N/Q \rfloor)n]/N}, \text{ where } n = 0, 1, \dots, N-1.$$

The sequence length $N$ of the cubic polynomial exponential sequence is a prime number. $\lambda_r$ is a cubic term coefficient of the cubic polynomial exponential sequence. $\lambda_r \in \{1, 2, \dots, N-1\}$. $r \in \{1, 2, \dots, R\}$. $\lambda_1 \neq \lambda_2 \neq \cdots \neq \lambda_R$. $3\lambda_r(k\Delta_{\mathrm{T},p} + \lfloor N/P \rfloor \cdot p - \lfloor N/P \rfloor)$ is a quadratic term coefficient of the cubic polynomial exponential sequence. $k \in \left\{0, 1, \dots, \left\lfloor N / P\Delta_{\mathrm{T},p} \right\rfloor - 1 \right\}.$ $\left( l\Delta_{\mathrm{F},q} + \lfloor N/Q \rfloor \cdot q - \lfloor N/Q \rfloor \right)$ is a monomial term coefficient of the cubic polynomial exponential sequence. $l \in \left\{0, 1, \dots, \left\lfloor N / Q\Delta_{\mathrm{F},q} \right\rfloor - 1 \right\}.$

With reference to the first aspect or the second aspect, in a possible design, sequences in any one of the $P \times Q$ sequence sets correspond to a same cubic term coefficient.

With reference to the first aspect or the second aspect, in a possible design, a cubic term coefficient corresponding to a sequence in the first sequence set is related to the first maximum round-trip time.

With reference to the first aspect or the second aspect, in a possible design, in the $P \times Q$ sequence sets, a plurality of second sequence sets correspond to a same cubic term coefficient, and the plurality of second sequence sets correspond to a same candidate maximum round-trip time.

With reference to the first aspect or the second aspect, in a possible design, in the $P \times Q$ sequence sets, a quantity $\Omega_{p,q}$ of sequences included in the sequence set corresponding to the $p^{\mathrm{th}}$ candidate maximum round-trip time $\Delta_{\mathrm{T},p}$ is:

$$\Omega_{p,q} = \left\lfloor N / \Delta_{\mathrm{T},p} \right\rfloor \cdot \left\lfloor N / \sum_{q=1}^{Q} \Delta_{\mathrm{F},q} \right\rfloor.$$

$N$ represents the sequence length of the cubic polynomial exponential sequence. $\Delta_{\mathrm{F},q}$ represents the $q^{\mathrm{th}}$ candidate maximum Doppler frequency shift. $p \in \{1, 2, \dots, P\}$. $q \in \{1, 2, \dots, Q\}$. The operator $\lfloor \cdot \rfloor$ represents rounding down. The operator $\sum \cdot$ represents accumulation.

With reference to the first aspect or the second aspect, in a possible design, the $\Omega_{p,q}$ cubic polynomial exponential sequences $s_{p,q}(n)$ included in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ are expressed as:

$$s_{p,q}(n) = e^{-j2\pi[\lambda_p n^3 + 3\lambda_p k\Delta_{\mathrm{T},p} n^2 + (l\Delta_{\mathrm{F},q} + \lfloor N/\sum_{i=1}^{P} \Delta_{\mathrm{T},i} \rfloor \cdot \sum_{i=1}^{p} \Delta_{\mathrm{T},i})n]/N}, \text{ where } n = 0, 1, \dots, N-1.$$

The sequence length $N$ of the cubic polynomial exponential sequence is a prime number. $\lambda_p$ is a cubic term coefficient of the cubic polynomial exponential sequence. $\lambda_p \in \{1, 2, ..., N\text{-}1\}$. $p \in \{1, 2, ..., P\}$. $\lambda_1 \neq \lambda_2 \neq \cdots \neq \lambda_P$. $3\lambda_p k\Delta_{T,p}$ is a quadratic term coefficient of the cubic polynomial exponential sequence. $k \in \left\{0, 1, ..., \left\lfloor N/\Delta_{T,p} \right\rfloor - 1\right\}$.

$\left(l\Delta_{F,q} + \left\lfloor N/\sum_{i=1}^{P} \Delta_{T,i} \right\rfloor \cdot \sum_{i=1}^{p} \Delta_{T,i}\right)$ is a monomial term coefficient of the cubic polynomial exponential sequence.

$l \in \left\{0, 1, ..., \left\lfloor N/\sum_{i=1}^{Q} \Delta_{F,i} \right\rfloor - 1\right\}$.

The foregoing possible design is applicable to a scenario in which maximum round-trip times corresponding to a plurality of terminal devices in a cell comply with exponential distribution, and maximum Doppler frequency shifts corresponding to the plurality of terminal devices in the cell comply with uniform distribution. In this case, the terminal device selects, with a high probability, a sequence set with a small maximum round-trip time, the sequence set with a small maximum round-trip time includes a large quantity of sequences, and different terminal devices select a same sequence with close probabilities.

With reference to the first aspect or the second aspect, in a possible design, a cubic term coefficient corresponding to a sequence in the first sequence set is related to the first maximum Doppler frequency shift.

With reference to the first aspect or the second aspect, in a possible design, in the $P \times Q$ sequence sets, a plurality of third sequence sets correspond to a same cubic term coefficient, and the plurality of third sequence sets correspond to a same candidate maximum Doppler frequency shift.

With reference to the first aspect or the second aspect, in a possible design, in the $P \times Q$ sequence sets, a quantity $\Omega_{p,q}$ of sequences included in the sequence set corresponding to the $q^{th}$ candidate maximum Doppler frequency shift $\Delta_{F,q}$ is:

$$\Omega_{p,q} = \left\lfloor N/\Delta_{F,q} \right\rfloor \cdot \left\lfloor N \Big/ \sum_{p=1}^{P} \Delta_{T,p} \right\rfloor.$$

$N$ represents the sequence length of the cubic polynomial exponential sequence. $\Delta_{T,p}$ represents the $p^{th}$ candidate maximum round-trip time. $p \in \{1, 2, ..., P\}$. $q \in \{1, 2, ..., Q\}$. The operator $\lfloor \cdot \rfloor$ represents rounding down. The operator $\sum \cdot$ represents accumulation.

With reference to the first aspect or the second aspect, in a possible design, the $\Omega_{p,q}$ cubic polynomial exponential sequences $s_{p,q}(n)$ included in the sequence set corresponding to the $p^{th}$ candidate maximum round-trip time $\Delta_{T,p}$ and the $q^{th}$ candidate maximum Doppler frequency shift $\Delta_{F,q}$ are expressed as:

$$\Omega_{p,q}(n) = e^{-j2\pi[\lambda_q n^3 + 3\lambda_r(k\Delta_{T,p} + \lfloor N/\sum_{i=1}^{P} \Delta_{T,i} \rfloor \cdot \sum_{i=1}^{p} \Delta_{T,i})n^2 + l\Delta_{F,q}n]/N}, \text{where } n = 0, 1, ..., N-1.$$

The sequence length $N$ of the cubic polynomial exponential sequence is a prime number. $\lambda_q$ is a cubic term coefficient of the cubic polynomial exponential sequence. $\lambda_q \in \{1, 2, ..., N\text{-}1\}$. $q \in \{1, 2, ..., Q\}$. $\lambda_1 \neq \lambda_2 \neq \cdots \neq \lambda_Q$. $3\lambda_r\left(k\Delta_{T,p} + \left\lfloor N/\sum_{i=1}^{P} \Delta_{T,i} \right\rfloor \cdot \sum_{i=1}^{p} \Delta_{T,i}\right)$ is a quadratic term coefficient of the cubic polynomial exponential sequence.

$k \in \left\{0, 1, ..., \left\lfloor N/\sum_{p=1}^{P} \Delta_{T,p} \right\rfloor - 1\right\}$. $l\Delta_{F,q}$ is a monomial term coefficient of the cubic polynomial exponential sequence.

$l \in \left\{0, 1, ..., \left\lfloor N/\Delta_{F,q} \right\rfloor - 1\right\}$.

The foregoing possible design is applicable to a scenario in which maximum round-trip times corresponding to a plurality of terminal devices in a cell are in uniform distribution, and maximum Doppler frequency shifts corresponding to the plurality of terminal devices in the cell are in exponential distribution. In this case, the terminal device selects, with a high probability, a sequence set with a small maximum Doppler frequency shift, the sequence set with a small maximum Doppler frequency shift includes a large quantity of sequences, and different terminal devices select a same sequence with close probabilities.

According to a third aspect, a communication apparatus is provided, to implement various methods. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system. The communication apparatus includes a corresponding module, unit, or means (means) for implementing the method. The module, unit, or means may be implemented by hardware software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions. When the processor executes the instructions, the communication apparatus is caused to perform the method according to any one of the aspects. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a fifth aspect, a communication apparatus is provided, and includes a processor and a communication interface. The communication interface is configured to communicate with a module outside the communication apparatus. The processor is configured to execute a computer program or instructions, to cause the communication apparatus to perform the method according to any one of the foregoing aspects. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a sixth aspect, a communication apparatus is provided, and includes at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system.

According to a seventh aspect, a communication apparatus is provided. The communication apparatus may be a terminal device, or may be a module or a unit (for example, a chip, a chip system, or a circuit) that is in the terminal device and that is in one-to-one correspondence with and performs the method/operation/step/action described in the first aspect, or may be a module or a unit that can be used in cooperation with the terminal device. Alternatively, the communication apparatus may be a network device, or may be a module or a unit (for example, a chip, a chip system, or a circuit) that is in the network device and that is in one-to-one correspondence with and performs the method/operation/step/action described in the second aspect, or may be a module or a unit that can be used in cooperation with the network device.

According to an eighth aspect, a computer-readable storage medium is provided. The computer-readable storage medium stores a computer program or instructions. When the computer program or the instructions are run on a communication apparatus, the communication apparatus is caused to perform the method according to any one of the first aspect or the second aspect.

According to a ninth aspect, a computer program product including instructions is provided. When the computer program product is run on a communication apparatus, the communication apparatus is caused to perform the method according to any one of the first aspect or the second aspect.

According to a tenth aspect, a communication apparatus is provided (for example, the communication apparatus may be a chip or a chip system). The communication apparatus includes a processor configured to implement functions in any one of the first aspect or the second aspect.

In some possible designs, the communication apparatus includes a memory. The memory is configured to store necessary program instructions and data.

In some possible designs, when the apparatus is a chip system, the apparatus may include a chip, or may include a chip and another discrete component.

It may be understood that, when the communication apparatus according to any one of the third aspect to the ninth aspect is a chip, a sending action/function of the communication apparatus may be understood as outputting information, and a receiving action/function of the communication apparatus may be understood as inputting information.

For technical effect brought by any design manner in the third aspect to the tenth aspect, refer to the technical effect brought by different design manners in the first aspect or the second aspect. Details are not described herein again.

**BRIEF DESCRIPTION OF DRAWINGS**

FIG. 1 is a diagram of a structure of a communication system according to this application;

FIG. 2 is a schematic flowchart of a communication method according to this application;

FIG. 3a to FIG. 3c are diagrams of a sequence set division manner according to this application;

FIG. 4a to FIG. 4c are diagrams of another sequence set division manner according to this application;

FIG. 5a to FIG. 5c are diagrams of still another sequence set division manner according to this application;

FIG. 6a to FIG. 6c are diagrams of yet another sequence set division manner according to this application;

FIG. 7 is a diagram of a structure of a communication apparatus according to this application;

FIG. 8 is a diagram of another structure of a communication apparatus according to this application; and

FIG. 9 is a diagram of still another structure of a communication apparatus according to this application.

## DESCRIPTION OF EMBODIMENTS

In the descriptions of this application, unless otherwise specified, the character "/" indicates that associated objects are in an "or" relationship. For example, A/B may represent A or B. "And/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, unless otherwise specified, "a plurality of" means two or more. "At least one of the following items (pieces)" or a similar expression thereof means any combination of these items, including a singular item (piece) or any combination of plural items (pieces). For example, at least one of a, b, or c may represent: a, b, c, a and b, a and c, b and c, and a and b and c, where a, b, and c may be singular or plural.

In addition, to clearly describe technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of various embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, an LTE-advanced (LTE-Advanced, LTE-A) system, a 5th generation (5th generation, 5G) new radio (new radio, NR) system, a 6th generation (6th generation, 6G) communication system, an integrated communication and sensing system, a sensing system, a vehicle to everything (vehicle to everything, V2X) system, an LTE-NR hybrid networking system, a device-to-device (device-to-device, D2D) system, a machine-to-machine (machine-to-machine, M2M) communication system, an internet of things (internet of things, IoT), an industrial internet, a non-terrestrial network (non-terrestrial network, NTN), another next generation communication system, or the like. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

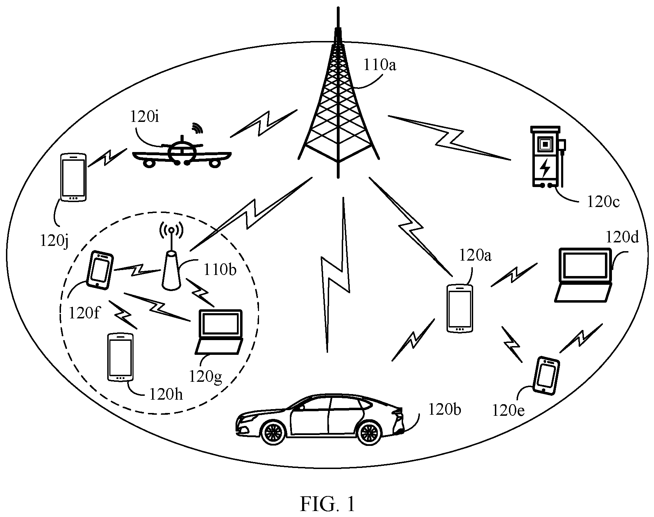

FIG. 1 shows an example of a communication system according to this application. The communication system includes at least one network device (for example, 110a and 110b in FIG. 1) and at least one terminal device (for example, 120a to 120j in FIG. 1).

Optionally, mutual communication may be performed between terminal devices, between a terminal device and a network device, and between network devices in a wired or wireless manner. FIG. 1 is merely a diagram. The communication system may further include another device. For example, the communication system may further include a wireless relay device, a wireless backhaul device, and a core network device, which are not shown in FIG. 1. A quantity of network devices and a quantity of terminal devices in FIG. 1 are merely examples. The communication system may include more or fewer network devices or terminal devices than those shown in FIG. 1.

Optionally, the terminal device may be a user side device having a wireless transceiver function, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a compute device or another processing device connected to a wireless modem, a vehicle-mounted device, a wearable device (which may also be referred to as a wearable intelligent device), a tablet computer or a computer having a wireless transceiver function, a virtual reality (virtual reality, VR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle (uncrewed aerial vehicle, UAV) to uncrewed aerial vehicle (UAV to UAV, U2U) communication capability. The terminal device may be mobile, or may be fixed. This is not specifically limited in this application.

Optionally, the network device may be a network side device having a wireless transceiver function, or may be a chip or a chip system disposed in the device, is located in a radio access network (radio access network, RAN) of a mobile communication system, and is configured to provide an access service for the terminal device. Optionally, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a broadband network gateway (broadband network gateway, BNG), an aggregation switch, or a non-3GPP access device; or may be a radio controller in a cloud radio access network (cloud radio access network, CRAN); or may be an access node (access point, AP) in a Wi-Fi system; or may be a wireless relay node or a wireless backhaul node; or may be a device that implements a base station function in IoT, V2X, D2D, or M2M. This is not specifically limited in embodiments of this application. For example, the base station in embodiments of this application may include base stations in various forms, for example, a macro base station, a micro base station (also referred to as a small cell), a relay station, and an access point. This is not specifically limited in embodiments of this application.

In some scenarios, the network device may alternatively be a module or a unit that can implement some or all of functions of the base station. For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the network device may be a network device or a module of the network device in an open radio access network (open RAN, ORAN) system. In the ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (the CU-CP or the CU-UP), the DU, and the RU in this application may be implemented by a software module, a hardware module, or a combination of a software module and a hardware module.

In some scenarios, the network device may also be referred to as a RAN node, a RAN device, or an access network device, or the network device may be named in another manner. This is not specifically limited in this application.

In some scenarios, roles of the network device and the terminal device are relative. For example, the network element 120i in FIG. 1 may be a helicopter or an uncrewed aerial vehicle, and may be configured as a mobile base station. For the terminal device 120j that accesses the RAN through the network element 120i, the network element 120i is a base station. However, for the network element 110a, the network element 120i is a terminal device. The network device and the terminal device are sometimes referred to as communication apparatuses. For example, the network elements 110a and 110b in FIG. 1 may be understood as communication apparatuses having a base station function, and the network elements 120a to 120j may be understood as communication apparatuses having a terminal function.

All or some functions of the terminal device or the network device in this application may alternatively be implemented by a software function running on hardware, or implemented by a virtualized function instantiated on a platform (for example, a cloud platform). The terminal device or the network device in this application may alternatively be a logical node, a logical module, or software that can implement all or some functions of the terminal device or the network device.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

For ease of understanding of the technical solutions in embodiments of this application, the following first briefly describes technologies related to this application.

(1) Correlation (correlation): A correlation of a sequence may be used for measuring impact of a transmission delay on signal sending. The correlation of the sequence may be reflected by using a correlation value obtained through a correlation operation.
The correlation operation refers to a processing process between two sequences, and includes multiplication and addition operations between different elements of the two sequences. The correlation operation may include a periodic correlation operation or an aperiodic correlation operation. In the aperiodic correlation operation, a correlation value of an overlapping element of two sequences is calculated based on a relative shift between the sequences. In the periodic correlation operation, a correlation value of two sequences is calculated based on a relative cyclic shift between the sequences.

(2) Auto-correlation: If two sequences are the same, a correlation between the two sequences is referred to as an auto-correlation.

(3) Cross-correlation: If two sequences are different, a correlation between the two sequences is referred to as a cross-correlation.

(4) Ambiguity function: The ambiguity function may be used for measuring impact of a Doppler frequency shift and a transmission delay on signal sending. The ambiguity function includes two types: an auto-ambiguity function and a cross-ambiguity function.

Auto-ambiguity function: The auto-ambiguity function may represent a correlation between a signal #1 and a signal #2. The signal #2 is a signal obtained after the signal #1 is affected by a delay and a Doppler frequency shift.

Cross-ambiguity function: The cross-ambiguity function may represent a correlation between a signal #A and a signal #B. The signal #A is a signal obtained after a signal #C is affected by a delay and a Doppler frequency shift. The signal #B and the signal #C are in a same sequence set.

(5) Zero ambiguity zone: The zero ambiguity zone means that an ambiguity function is equal to zero within a specific delay range and a specific Doppler range.

(6) Low ambiguity zone: The low ambiguity zone means that a value of an ambiguity function is less than a preset threshold within a specific delay range and a specific Doppler range.

(7) Zero correlation zone: The zero correlation zone means that a correlation function is equal to zero with in a specific delay range (where no Doppler frequency shift exists).

(8) Low correlation zone: The low correlation zone means that a value of a correlation function is less than a preset threshold within a specific delay range (where no Doppler frequency shift exists).

(9) Sequence capacity: The sequence capacity refers to a quantity of sequences included in a sequence set.

Currently, communication sequences are widely used in a long term evolution (long term evolution, LTE) or new radio (new radio, NR) system. Downlink synchronization and uplink random access may be implemented by using a correlation of the sequence, and pilot multiplexing may be implemented by using orthogonality of the sequence.

In LTE or NR, Zadoff-Chu sequences (ZC sequence for short) are typically used for uplink random access. In an implementation, a ZC sequence $s_{u,k}(n)$ may be expressed as:

$$s_{u,k}(n) = e^{-j\pi u(n+k\Delta_T)(n+k\Delta_T+1)/N}, \text{where } n = 0, 1, \ldots, N-1 \quad (1)$$

$u$ represents a root sequence number. $u \in \{1, 2, \ldots, N-1\}$. $k$ represents an index of a cyclic shift. $k \in \{0, 1, \ldots, \lfloor N/\Delta_T \rfloor - 1\}$. $\Delta_T$ represents a correlation zone. The operator $\lfloor \cdot \rfloor$ represents rounding down. $N$ represents a sequence length of the ZC sequence. $N$ is a prime number.

Generally, a plurality of ZC sequences generated by using different cyclic shifts of a same root sequence number may form a zero correlation zone, and ZC sequences generated by using any cyclic shift of different root sequence numbers may form a low correlation zone. It can be learned that, for a root sequence number $u$, $\lfloor N/\Delta_T \rfloor$ ZC sequences $s_{u,0}(n), s_{u,1}(n), \ldots, s_{u,\lfloor N/\Delta_T \rfloor - 1}(n)$ obtained through Formula (1) form a zero correlation zone in a delay domain.

In high-speed mobility scenarios, there are Doppler frequency shifts, and an ambiguity function of $s_{u,k}(n)$ has a plurality of peak values. For example, the ambiguity function $A(\tau, v)$ of $s_{u,k}(n)$ may be expressed as:

$$A(\tau, v) = \sum_{n=0}^{N-1} s_{u,k}(n) s_{u,k}^*[(n-\tau) \bmod N] e^{j2\pi n v/N} \quad (2)$$

$\tau$ represents a transmission delay, and $v$ represents a Doppler frequency shift.

To improve a capability of the ZC sequence to withstand a frequency offset, a cyclic shift may be restricted. In other words, a cyclic shift is obtained based on a restricted set. For example, the ZC sequence whose cyclic shift is restricted may be expressed as:

$$s_{u,k}(n) = e^{-j\pi u(n+C_k)(n+C_k+1)/N}, \text{where } n = 0, 1, \ldots, N-1 \quad (3)$$

$C_k$ represents the cyclic shift, and $C_k$ is obtained based on the restricted set. Currently, there are a restricted set type A (Restricted Set Type A) used for withstanding a frequency offset of one subcarrier and a restricted set type B (Restricted Set Type B) used for withstanding a frequency offset of two subcarriers. A quantity of available cyclic shifts in the restricted set type A does not exceed 1/3 of that in a non-restricted set, and a quantity of available cyclic shifts in the restricted set type B does not exceed 1/5 of that in the non-restricted set.

During uplink random access, a network device may broadcast a start root sequence number, a maximum round-trip time $\Delta_T$, and a maximum Doppler frequency shift $\Delta_F$ by using a system information block 1 (system information block, SIB1). A terminal device determines 64 preamble sequences based on one or more root sequence numbers including the start root sequence number and according to a principle of "traversing the cyclic shifts first and then traversing the root sequence numbers", and then selects one preamble sequence from the 64 preamble sequences to initiate random access.

For example, for the ZC sequence, the sequence length $N = 839$, the maximum round-trip time $\Delta_T = 15$, the maximum Doppler frequency shift $\Delta_F = 1,3,5$, and the start root sequence number $u = 21$. As shown in Table 1, when $\Delta_F = 1$ (where there is no need to withstand a frequency offset), 64 preamble sequences need to be generated by using two root sequence numbers and corresponding cyclic shifts. As shown in Table 2, when $\Delta_F = 3$ (where a frequency offset of $\pm 1$ subcarrier spacing needs to be withstood), 64 preamble sequences need to be generated by using three root sequence numbers and corresponding cyclic shifts. As shown in Table 3, when $\Delta_F = 5$ (where a frequency offset of $\pm 2$ subcarrier spacings needs to be withstood), 64 preamble sequences need to be generated by using five root sequence numbers and corresponding cyclic shifts.

Table 1 $\Delta_F= 1$

| Root sequence number | Cyclic shift | | | | | | | | | | | | | | | |
|---|---|---|---|---|---|---|---|---|---|---|---|---|---|---|---|---|
| 21 | 0 | 15 | 30 | 45 | 60 | 75 | 90 | 105 | 120 | 135 | 150 | 165 | 180 | 195 | 210 | 225 |
| | 240 | 255 | 270 | 285 | 300 | 315 | 330 | 345 | 360 | 375 | 390 | 405 | 420 | 435 | 450 | 465 |
| | 480 | 495 | 510 | 525 | 540 | 555 | 570 | 585 | 600 | 615 | 630 | 645 | 660 | 675 | 690 | 705 |
| | 720 | 735 | 750 | 765 | 780 | 795 | 810 | 825 | | | | | | | | |
| 818 | 0 | 15 | 30 | 45 | 60 | 75 | 90 | 105 | | | | | | | | |

Table 2 $\Delta_F= 3$

| Root sequence number | Cyclic shift | | | | | | | | | | | | | | | |
|---|---|---|---|---|---|---|---|---|---|---|---|---|---|---|---|---|
| 21 | 0 | 38 | 76 | 114 | 152 | 190 | 228 | 266 | 304 | 342 | 380 | 418 | 456 | 494 | 532 | 570 |
| | 608 | 684 | 722 | 760 | 798 | | | | | | | | | | | |
| 818 | 0 | 38 | 76 | 114 | 152 | 190 | 228 | 266 | 304 | 342 | 380 | 418 | 456 | 494 | 532 | 570 |
| | 608 | 684 | 722 | 760 | 798 | | | | | | | | | | | |
| 95 | 0 | 38 | 76 | 114 | 152 | 190 | 228 | 266 | 304 | 342 | 380 | 418 | 456 | 494 | 532 | 570 |
| | 608 | | | | | | | | | | | | | | | |

Table 3 $\Delta_F= 5$

| Root sequence number | Cyclic shift | | | | | | | | | | | | | | |
|---|---|---|---|---|---|---|---|---|---|---|---|---|---|---|---|
| 21 | 0 | 15 | 110 | 125 | 220 | 235 | 330 | 345 | 440 | 455 | 550 | 565 | 660 | 675 | |
| 818 | 0 | 15 | 110 | 125 | 220 | 235 | 330 | 345 | 440 | 455 | 550 | 565 | 660 | 675 | |
| 95 | 0 | 15 | 30 | 151 | 166 | 181 | 302 | 317 | 332 | 453 | 468 | 483 | 604 | 619 | 634 |
| 744 | 0 | 15 | 30 | 151 | 166 | 181 | 302 | 317 | 332 | 453 | 468 | 483 | 604 | 619 | 634 |
| 95 | 0 | 15 | 30 | 153 | 168 | 183 | | | | | | | | | |

A sequence capacity of the ZC sequence is in positive correlation with the square of the sequence length. For example, a sequence capacity corresponding to a cyclic shift non-restricted set is $(N-1) \cdot \lfloor N/\Delta_T \rfloor$, and the sequence capacity is limited. Further, in a high-speed mobility scenario, a sequence capacity corresponding to a cyclic shift restricted set type does not exceed $(N-1) \cdot \lfloor N/\Delta_T \Delta_F \rfloor$, and the sequence capacity is further reduced.

In addition, the network device configures a same maximum round-trip time $\Delta_T$ and a same maximum Doppler frequency shift $\Delta_F$ for all terminal devices in a cell, so that a specific quantity (for example, 64) of sequences can be determined only based on a large quantity of root sequence numbers. Consequently, when a total quantity of root sequence numbers is fixed, start root sequence numbers cannot be configured for more cells. In other words, sequence configuration efficiency in the foregoing solution is low.

In view of this, this application provides a cubic polynomial exponential sequence, and a sequence capacity may be in direct proportion to the cube of a sequence length, so that the sequence capacity is improved. In addition, the network device may indicate at least one candidate maximum round-trip time and at least one candidate maximum Doppler frequency shift, so that terminal devices at different locations and at different moving speeds in a cell may select an appropriate maximum round-trip time and an appropriate maximum Doppler frequency shift, to determine a preamble sequence, so as to improve sequence configuration efficiency.

With reference to the accompanying drawings, the following describes in detail a communication method provided in embodiments of this application by using interaction between the network device and the terminal device shown in FIG. 1 as an example.

It may be understood that, in embodiments of this application, the network device or the terminal device may perform some or all of steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

It should be noted that, in the following embodiments of this application, names of messages or names of parameters in messages of devices are merely examples, and the messages or the parameters may have other names in specific implementations. This is not specifically limited in embodiments of this application.

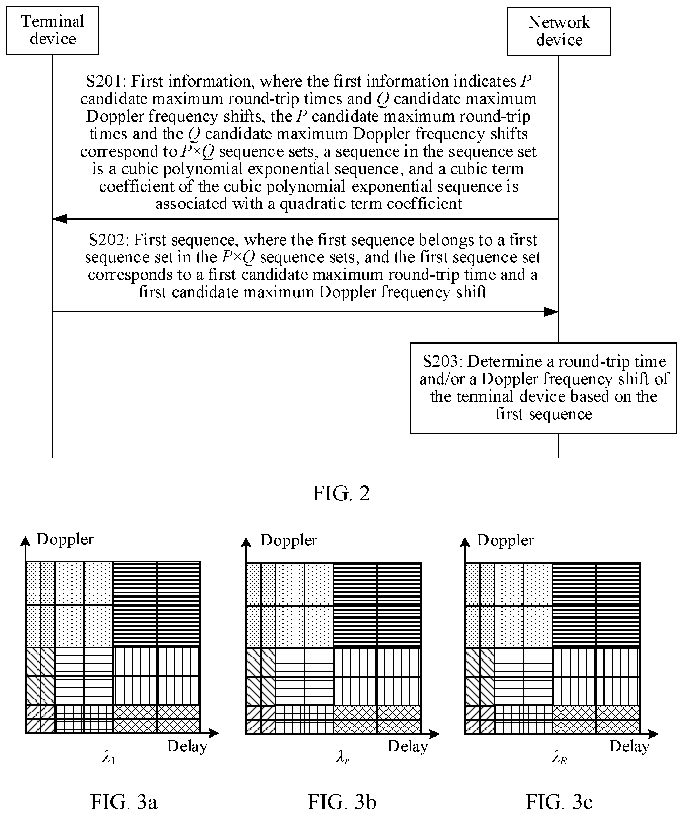

FIG. 2 is a schematic flowchart of a communication method according to an embodiment of this application. The communication method includes the following steps.

S201: A network device sends first information. Correspondingly, a terminal device receives the first information from the network device.

The first information indicates $P$ candidate maximum round-trip times and $Q$ candidate maximum Doppler frequency shifts, and $P$ and $Q$ are positive integers. For example, the $P$ candidate maximum round-trip times may be represented as $\Delta_{T,1}, \Delta_{T,2}, ...,$ and $\Delta_{T,P}$, and the $Q$ candidate maximum Doppler frequency shifts may be represented as $\Delta_{F,1}, \Delta_{F,2}, ... ,$ and $\Delta_{F,Q}$.

The $P$ candidate maximum round-trip times and the $Q$ candidate maximum Doppler frequency shifts correspond to $P \times Q$ sequence sets. To be specific, a $p^{th}$ candidate maximum round-trip time $\Delta_{T,p}$ and a $q^{th}$ candidate maximum Doppler frequency shift $\Delta_{F,q}$ correspond to one sequence set, $p \in \{1, 2, ... , P\}$, and $q \in \{1, 2, ... , Q\}$.

A sequence in each sequence set is a cubic polynomial exponential sequence. A cubic term coefficient of the cubic polynomial exponential sequence is associated with a quadratic term coefficient of the cubic polynomial exponential sequence. For example, the cubic polynomial exponential sequence may be expressed as:

$$s_{a,b,c,d}(n) = e^{-j2\pi(an^3+bn^2+cn+d)/N}, \text{where } n = 0, 1, ..., N-1 \quad (4)$$

$a$ is the cubic term coefficient of the cubic polynomial exponential sequence. $b$ is the quadratic term coefficient of the cubic polynomial exponential sequence. $c$ is a monomial term coefficient of the cubic polynomial exponential sequence. $d$ is a constant term of the cubic polynomial exponential sequence. $N$ is a sequence length of the cubic polynomial exponential sequence, and $N$ may be a prime number. $n \in \{0, 1, ..., N-1\}$.

It may be understood that the constant term $d$ of the cubic polynomial exponential sequence may be considered as rotating all symbols in the sequence $s_{a,b,c,d}(n)$ by a common phase $e^{-j2\pi d/N}$. Because the phase rotation does not change a correlation and ambiguity of the sequence, without a loss of generality, when $d = 0$, the cubic polynomial exponential sequence is degraded to $s_{a,b,c}(n) = e^{-j2\pi(an3+bn2+cn)/N}$. For ease of description, in the following embodiments of this application, an example in which $d = 0$ is used for description.

In a possible implementation, that the cubic term coefficient of the cubic polynomial exponential sequence is associated with the quadratic term coefficient may be understood as that the cubic term coefficient may be used for determining the quadratic term coefficient. For example, the cubic term coefficient $a$ and the quadratic term coefficient $b$ may satisfy: $b = 3aX$. Detailed descriptions of $X$ are provided in subsequent embodiments. Details are not described herein.

In a possible implementation, low ambiguity zones corresponding to different sequence sets in the $P \times Q$ sequence sets do not overlap each other. The low ambiguity zone corresponding to the sequence set may be understood as a sum of low ambiguity zones of all sequences in the sequence set. Alternatively, low ambiguity zones of sequences in different sequence sets do not overlap each other. For example, if a sequence 1 and a sequence 2 respectively belong to a sequence set 1 and a sequence set 2, a low ambiguity zone of the sequence 1 and a low ambiguity zone of the sequence 2 do not overlap each other. Alternatively, low ambiguity zones of different sequences in a same sequence set do not overlap each other. For example, if both a sequence 3 and a sequence 4 belong to the sequence set 1, low ambiguity zones of the sequence 3 and the sequence 4 do not overlap each other.

In a possible implementation, sequences in different sequence sets in the $P \times Q$ sequence sets do not overlap each other. In other words, different sequence sets do not include a same sequence, that is, a sequence belongs to only one sequence set.

In a possible implementation, the network device may send the first information in system information or a system message. For example, the first information may be carried in a SIB1, or the first information may be carried in another system message. This is not specifically limited in this application.

In a possible implementation, the network device may further configure, for the terminal device, the sequence length $N$, a total quantity $M$ (for example, 64) of sequences needed for random access, a start cubic term coefficient, and the like.

S202: The terminal device sends a first sequence. Correspondingly, the network device receives the first sequence from the terminal device.

The first sequence belongs to a first sequence set in the $P \times Q$ sequence sets. The first sequence set corresponds to a first maximum round-trip time and a first maximum Doppler frequency shift. The first maximum round-trip time is one of the $P$ candidate maximum round-trip times, and the first maximum Doppler frequency shift is one of the $Q$ candidate maximum Doppler frequency shifts.

In a possible implementation, the first maximum round-trip time is related to signal quality of a first signal. The first signal may be a signal that is received by the terminal device from the network device before step S202. For example, the first signal may be a secondary synchronization signal (secondary synchronization signal, SSS). The signal quality may be represented by reference signal received power (reference signal received power, RSRP), reference signal received quality (reference signal received quality, RSRQ), and the like. In addition, the first maximum Doppler frequency shift is related to a moving speed of the terminal device.

For example, before step S202, the terminal device may select the first maximum round-trip time from the $P$ candidate maximum round-trip times based on the signal quality of the first signal, and select the first maximum Doppler frequency shift from the $Q$ candidate maximum Doppler frequency shifts based on the moving speed of the terminal device. For example, when the signal quality of the first signal is high, the first maximum round-trip time is small, and when the moving speed of the terminal device is high, the first maximum Doppler frequency shift is also large.

In a possible implementation, after determining the first maximum round-trip time and the first maximum Doppler frequency shift, the terminal device may determine the first sequence set corresponding to the first maximum round-trip time and the first maximum Doppler frequency shift, randomly select one sequence from the first sequence set as the first sequence, generate the first signal based on the first sequence (for example, map the first sequence to a time domain resource and/or a frequency domain resource), and send the first signal.

In a possible implementation, that the network device receives the first sequence may include: The network device performs blind detection based on the $P \times Q$ sequence sets. For example, the network device may receive a second signal, process the second signal to obtain a second sequence, and determine the first sequence based on the second sequence. The second signal may be understood as a signal obtained after the first signal is transmitted through a channel. The second sequence may be understood as a sequence obtained after time shifting and/or frequency shifting are/is performed on the first sequence. Alternatively, the second sequence may be understood as a sequence obtained after the first sequence is transmitted through a channel.

For example, processing the second signal to obtain the second sequence may include: sampling the second signal; removing a cyclic prefix (cyclic prefix, CP); performing $N_{FFT}$-point fast Fourier transform (fast Fourier transform, FFT); and performing $N$-point inverse discrete Fourier transform (inverse discrete Fourier transform, IDFT), to obtain the second sequence. $N_{FFT}$ is a quantity of sampling points, and $N_{FFT} > N$.

For example, determining the first sequence based on the second sequence may include: when a Doppler frequency shift is not considered, performing a correlation operation by using the second sequence and a sequence in the $P \times Q$ sequence sets, to determine the first sequence; or when a Doppler frequency shift is considered, performing a correlation operation by using the second sequence and different Doppler frequency shifts of sequences in the sequence set, to determine the first sequence.

In a possible implementation, the first sequence may be used as a random access preamble sequence, and that the terminal device sends the first sequence may be understood as that the terminal device initiates random access. After receiving the first sequence, the network device may perform a subsequent random access procedure.

S203: The network device determines a round-trip time and/or a Doppler frequency shift of the terminal device based on the first sequence.

In a possible implementation, the network device may determine the round-trip time and/or the Doppler frequency shift of the terminal device based on a correlation operation result of the first sequence and the second sequence. In addition, the network device may determine a timing advance (timing advance, TA) based on the round-trip time of the terminal device, and/or determine a frequency offset (frequency offset, FO) based on the Doppler frequency shift of the terminal device. Then, the network device may send indication information to the terminal device, to indicate the TA and/or the FO determined by the network device, so that the terminal device communicates with the network device based on the TA and/or the FO.

According to the solution of this application, the sequences in the $P \times Q$ sequence sets are cubic polynomial exponential sequences. According to this sequence design, a sequence capacity may be in direct proportion to the cube of a sequence length. In comparison with a ZC sequence, a sequence capacity is improved. In addition, the network device may indicate at least one candidate maximum round-trip time and at least one candidate maximum Doppler frequency shift, so that terminal devices at different locations and at different moving speeds in a cell may select an appropriate maximum round-trip time and an appropriate maximum Doppler frequency shift, to determine a sequence set and select a sequence from the sequence set. When the total quantity $M$ (for example, 64) of sequences needed for random access is fixed, because the network device performs division on maximum round-trip times and maximum Doppler frequency shifts, the $M$ sequences are distributed in the $P \times Q$ sequence sets. To be specific, it is determined that parameters of the $M$

sequences include the $P$ candidate maximum round-trip times, the $Q$ candidate maximum Doppler frequency shifts, and cubic term coefficients of the cubic polynomial exponential sequences. In other words, a same quantity of sequences may be determined by using values of a smaller quantity of cubic term coefficients, so that use of the cubic term coefficients can be reduced, and the network device can configure cubic term coefficients for more cells, to improve sequence configuration efficiency.

In addition, in the $P \times Q$ sequence sets, low ambiguity zones of sequences in different sequence sets do not overlap each other, sequences in different sequence sets do not overlap each other, and low ambiguity zones of different sequences in a same sequence set do not overlap each other, so that interference between terminal devices can be reduced, and a success rate of random access can be improved.

The foregoing describes the communication method provided in this application. The following describes the sequences in the $P \times Q$ sequence sets and sequence division manners.

For example, in the $P \times Q$ sequence sets, a cubic polynomial exponential sequence in the sequence set corresponding to the $p^{th}$ candidate maximum round-trip time $\Delta_{T,p}$ and the $q^{th}$ candidate maximum Doppler frequency shift $\Delta_{F,q}$ may be expressed as:

$$s_{p,q}(n) = e^{-j2\pi(\lambda n^3 + 3\lambda \bar{k}_p n^2 + \bar{l}_q n)/N}, \text{where } n = 0, 1, \dots, N-1.$$

$a = \lambda$, and is a cubic term coefficient of the cubic polynomial exponential sequence. $b = 3\lambda \bar{k}_p$, and is a quadratic term coefficient of the cubic polynomial exponential sequence. $c = \bar{l}_q$, and is a monomial term coefficient of the cubic polynomial exponential sequence. $d = 0$, and is a constant term of the cubic polynomial exponential sequence. $N$ is a sequence length of the cubic polynomial exponential sequence, and $N$ may be a prime number. $p \in \{1, 2, \dots, P\}$. $q \in \{1, 2, \dots, Q\}$. $\bar{k}_1 \neq \bar{k}_2 \neq \cdots \neq \bar{k}_P$ and $\bar{l}_1 \neq \bar{l}_2 \neq \cdots \neq \bar{l}_Q$ are satisfied.

For different sequence set division manners, $\bar{k}_p$ and $\bar{l}_q$ may have different implementations. For example, for division of the $P \times Q$ sequence sets, this application provides the following four division manners.

Manner 1: Each of the $P \times Q$ sequence sets includes a same quantity of sequences. For example, the quantity $\Omega_{p,q}$ of sequences included in each sequence set is:

$$\Omega_{p,q} = R \cdot \left\lfloor N \middle/ \sum_{p=1}^{P} \Delta_{T,p} \right\rfloor \cdot \left\lfloor N \middle/ \sum_{q=1}^{Q} \Delta_{F,q} \right\rfloor \quad (5)$$

$N$ represents the sequence length of the cubic polynomial exponential sequence. $\Delta_{T,p}$ represents the $p^{th}$ candidate maximum round-trip time. $\Delta_{F,q}$ represents the $q^{th}$ candidate maximum Doppler frequency shift. $R$ represents a quantity of candidate cubic term coefficients. $p \in \{1, 2, \dots, P\}$. $q \in \{1, 2, \dots, Q\}$. The operator $\lfloor \cdot \rfloor$ represents rounding down. The operator $\sum \cdot$ represents accumulation.

In Manner 1, the $\Omega_{p,q}$ cubic polynomial exponential sequences $s_{p,q}(n)$ included in the sequence set corresponding to the $p^{th}$ candidate maximum round-trip time $\Delta_{T,p}$ and the $q^{th}$ candidate maximum Doppler frequency shift $\Delta_{F,q}$ are expressed as:

$$s_{p,q}(n) = e^{-j2\pi(\lambda_r n^3 + 3\lambda_r \bar{k}_p n^2 + \bar{l}_q n)/N} \quad (6),$$

where

$$\bar{k}_p = k\Delta_{T,p} + \left\lfloor N/\sum_{i=1}^{P} \Delta_{T,i} \right\rfloor \cdot \sum_{i=1}^{p} \Delta_{T,i};$$

and

$$\bar{l}_q = l\Delta_{F,q} + \left\lfloor N \middle/ \sum_{i=1}^{P} \Delta_{T,i} \right\rfloor \cdot \sum_{i=1}^{p} \Delta_{T,i}.$$

The sequence length $N$ of the cubic polynomial exponential sequence may be a prime number, and $n = 0, 1, \dots, N-1$.

$a = \lambda = \lambda_r$, and is a cubic term coefficient of the cubic polynomial exponential sequence. $\lambda_r \in \{1, 2, \dots, N-1\}$. $r \in \{1, 2, \dots, R\}$. $\lambda_1 \neq \lambda_2 \neq \cdots \neq \lambda_R$. In other words, a value of $\lambda_r$ is not associated with a maximum round-trip time or a maximum Doppler frequency shift. $r$ may be understood as an index of the cubic term coefficient.
$b = 3\lambda \overline{k}_p = 3\lambda_r\left(k\Delta_{T,p} + \left\lfloor N/\sum_{i=1}^{P}\Delta_{T,i}\right\rfloor \cdot \sum_{i=1}^{p}\Delta_{T,i}\right)$ , and is a quadratic term coefficient of the cubic polynomial exponential sequence. $k \in \left\{0, 1, \dots, \left\lfloor N/\sum_{i=1}^{P}\Delta_{T,i}\right\rfloor - 1\right\}$ . In other words,
$b = 3aX = 3\lambda_r\left(k\Delta_{T,p} + \left\lfloor N/\sum_{i=1}^{P}\Delta_{T,i}\right\rfloor \cdot \sum_{i=1}^{p}\Delta_{T,i}\right)$ . $c = \overline{l}_q = \left(l\Delta_{F,q} + \left\lfloor N/\sum_{i=1}^{P}\Delta_{T,i}\right\rfloor \cdot \sum_{i=1}^{p}\Delta_{T,i}\right)$ , and is a monomial term coefficient of the cubic polynomial exponential sequence. $l \in \left\{0, 1, \dots, \left\lfloor N/\sum_{i=1}^{Q}\Delta_{F,i}\right\rfloor - 1\right\}$ .

Optionally, a parameter $\lambda_r$ may be associated with a cell. For example, a same cell corresponds to a same value of $\lambda_r$, and different cells correspond to different values of $\lambda_r$. Alternatively, a same cell corresponds to a plurality of values of $\lambda_r$, and different cells correspond to different values of $\lambda_r$. The network device may configure a value of start $\lambda_r$ for a cell. When the total quantity $M$ of sequences needed for random access is determined, a quantity of parameters $\lambda_r$ corresponding to the cell may be determined, and values of $\lambda_r$ may be determined based on the value of start $\lambda_r$.

Parameters $\overline{k}_p$ and $\overline{l}_q$ may be associated with the sequence set. For example, for different sequence sets in the $P \times Q$ sequence sets, values of the parameter $\overline{k}_p$ and/or the parameter $\overline{l}_q$ may be different. For different sequences in a same sequence set, the values of the parameter $\overline{k}_p$ and/or the parameter $\overline{l}_q$ are also different.

For example, $P = Q = 3$, $\Delta_{T,1} = \Delta_T$, $\Delta_{T,2} = 2\Delta_T$, $\Delta_{T,3} = 3\Delta_T$, $\Delta_{F,1} = \Delta_F$, $\Delta_{F,2} = 2\Delta_F$, $\Delta_{F,3} = 3\Delta_F$, and $\Delta_T$ and $\Delta_F$ are respectively a minimum unit of a round-trip time and a minimum unit of a Doppler frequency shift, and each sequence set includes four sequences. FIG. 3a to FIG. 3c show a division manner of sequence sets in a delay Doppler plane. FIG. 3a, FIG. 3b, and FIG. 3c separately show sequence sets corresponding to different values of $\lambda_r$. It can be learned that, in Manner 1, different values of $\lambda_r$ correspond to a same sequence set division manner. In other words, a sequence set division manner does not depend on a value of the cubic term coefficient.

As shown in FIG. 3a, FIG. 3b, and FIG. 3c, a horizontal axis represents a delay domain, and a vertical axis represents a Doppler domain. Each rectangle may correspond to one sequence. An area of the rectangle may represent an area of a low ambiguity zone of the sequence. Sequences corresponding to rectangles with a same filling pattern belong to a same sequence set. If a unit scale on the horizontal axis is $\Delta_T$, and a unit scale on the vertical axis is $\Delta_F$, when $p$ and $q$ have different values, the values of $\overline{k}_p$ and $\overline{l}_q$ may be shown as follows:

A sequence parameter $\langle \overline{k}_1, \overline{l}_1 \rangle$ included in a sequence set corresponding to $p = 1$ and $q = 1$, that is, $\Delta_{T,1}, \Delta_{F,1}$, is: $\langle 0,0 \rangle, \langle 1,0 \rangle, \langle 0, 1 \rangle, \langle 1,1 \rangle$.

A sequence parameter $\langle \overline{k}_2, \overline{l}_1 \rangle$ included in a sequence set corresponding to $p = 2$ and $q = 1$, that is, $\Delta_{T,2}, \Delta_{F,1}$, is: $\langle 2,0 \rangle, \langle 4,0 \rangle, (2,1), \langle 4,1 \rangle$.

A sequence parameter $\langle \overline{k}_3, \overline{l}_1 \rangle$ included in a sequence set corresponding to $p = 3$ and $q = 1$, that is, $\Delta_{T,3}, \Delta_{F,1}$, is: $(6,0), (9,0), \langle 6,1 \rangle, \langle 9,1 \rangle$.

A sequence parameter $\langle \overline{k}_1, \overline{l}_2 \rangle$ included in a sequence set corresponding to $p = 1$ and $q = 2$, that is, $\Delta_{T,1}, \Delta_{F,2}$, is: $(0,2), (1, 2), (0,4), (1,4)$.

A sequence parameter $\langle \overline{k}_2, \overline{l}_2 \rangle$ included in a sequence set corresponding to $p = 2$ and $q = 2$, that is, $\Delta_{T,2}, \Delta_{F,2}$, is: $(2,2), (4,2), (2,4), (4,4)$.

A sequence parameter $\langle \overline{k}_3, \overline{l}_2 \rangle$ included in a sequence set corresponding to $p = 3$ and $q = 2$, that is, $\Delta_{T,3}, \Delta_{F,2}$, is: $(6,2), (9,2), (6,4), (9,4)$.

A sequence parameter $\langle \overline{k}_1, \overline{l}_3 \rangle$ included in a sequence set corresponding to $p = 1$ and $q = 3$, that is, $\Delta_{T,1}, \Delta_{F,3}$, is: $(0,6), (1,6), (0,9), (1,9)$.

A sequence parameter $\langle \overline{k}_2, \overline{l}_3 \rangle$ included in a sequence set corresponding to $p = 2$ and $q = 3$, that is, $\Delta_{T,2}, \Delta_{F,3}$, is: $\langle 2,6 \rangle, \langle 4,6 \rangle, \langle 2,9 \rangle, \langle 4,9 \rangle$.

A sequence parameter $\langle \overline{k}_3, \overline{l}_3 \rangle$ included in a sequence set corresponding to $p = 3$ and $q = 3$, that is, $\Delta_{T,3}, \Delta_{F,3}$, is: $(6,6), (9,6), (6,9), (9,9)$.

In Manner 1, because each of the $P \times Q$ sequence sets includes a same quantity of sequences, Manner 1 is applicable to a scenario in which maximum round-trip times and maximum Doppler frequency shifts that correspond to a plurality of terminal devices in a cell comply with uniform distribution. In this case, the terminal device selects any sequence set with a same probability. Because each sequence set includes a same quantity of sequences, different terminal devices select a same sequence with a same probability.

Manner 2: Each of the $P \times Q$ sequence sets corresponds to a same total area of low ambiguity zones. For example, the total area of the low ambiguity zones corresponding to the sequence set may be a sum of areas of low ambiguity zones of all sequences in the sequence set.

For example, in Manner 2, in the $P \times Q$ sequence sets, a quantity $\Omega_{p,q}$ of sequences included in the sequence set corresponding to the $p^{th}$ candidate maximum round-trip time $\Delta_{T,p}$ and the $q^{th}$ candidate maximum Doppler frequency shift $\Delta_{F,q}$ is:

$$\Omega_{p,q} = R \cdot \lfloor N/P\Delta_{\mathrm{T},p} \rfloor \cdot \lfloor N/Q\Delta_{\mathrm{F},q} \rfloor \quad (7)$$

$N$ represents the sequence length of the cubic polynomial exponential sequence. $R$ represents a quantity of candidate cubic term coefficients. $p \in \{1, 2, \dots, P\}$. $q \in \{1, 2, \dots, Q\}$. The operator $\lfloor \cdot \rfloor$ represents rounding down.

In Manner 2, the $\Omega_{p,q}$ cubic polynomial exponential sequences $s_{p,q}(n)$ included in the sequence set corresponding to the $p^{\text{th}}$ candidate maximum round-trip time $\Delta_{\mathrm{T},p}$ and the $q^{\text{th}}$ candidate maximum Doppler frequency shift $\Delta_{\mathrm{F},q}$ are expressed as:

$$s_{p,q}(n) = e^{-j2\pi(\lambda_r n^3 + 3\lambda_r \bar{k}_p n^2 + \bar{l}_q n)/N} \quad (8),$$

where

$$\bar{k}_p = k\Delta_{\mathrm{T},p} + \lfloor N/P \rfloor \cdot p - \lfloor N/P \rfloor;$$

and

$$\bar{l}_q = l\Delta_{\mathrm{F},q} + \lfloor N/Q \rfloor \cdot q - \lfloor N/Q \rfloor.$$

The sequence length $N$ of the cubic polynomial exponential sequence may be a prime number, and $n = 0, 1, \dots, N-1$.

$a = \lambda = \lambda_r$, and is a cubic term coefficient of the cubic polynomial exponential sequence. $\lambda_r \in \{1, 2, \dots, N-1\}$. $r \in \{1, 2, \dots, R\}$. $\lambda_1 \neq \lambda_2 \neq \cdots \neq \lambda_R$. In other words, a value of $\lambda_r$ is not associated with a maximum round-trip time or a maximum Doppler frequency shift. $r$ may be understood as an index of the cubic term coefficient. $b = 3\lambda\bar{k}_p = 3\lambda_r(k\Delta_{\mathrm{T},p} + \lfloor N/P \rfloor \cdot p - \lfloor N/P \rfloor)$, and is a quadratic term coefficient of the cubic polynomial exponential sequence. $k \in \{0, 1, \dots, \lfloor N/P\Delta_{\mathrm{T},p} \rfloor - 1\}$. In other words, $b = 3aX = 3\lambda_r(k\Delta_{\mathrm{T},p} + \lfloor N/P \rfloor \cdot p - \lfloor N/P \rfloor)$. $c = \bar{l}_q = (l\Delta_{\mathrm{F},q} + \lfloor N/Q \rfloor \cdot q - \lfloor N/Q \rfloor)$, and is a monomial term coefficient of the cubic polynomial exponential sequence. $l \in \{0, 1, \dots, \lfloor N/Q\Delta_{\mathrm{F},q} \rfloor - 1\}$.

Optionally, a parameter $\lambda_r$ may be associated with a cell. Parameters $\bar{k}_p$ and $\bar{l}_q$ may be associated with the sequence set. Refer to related descriptions in Manner 1. Details are not described herein again.

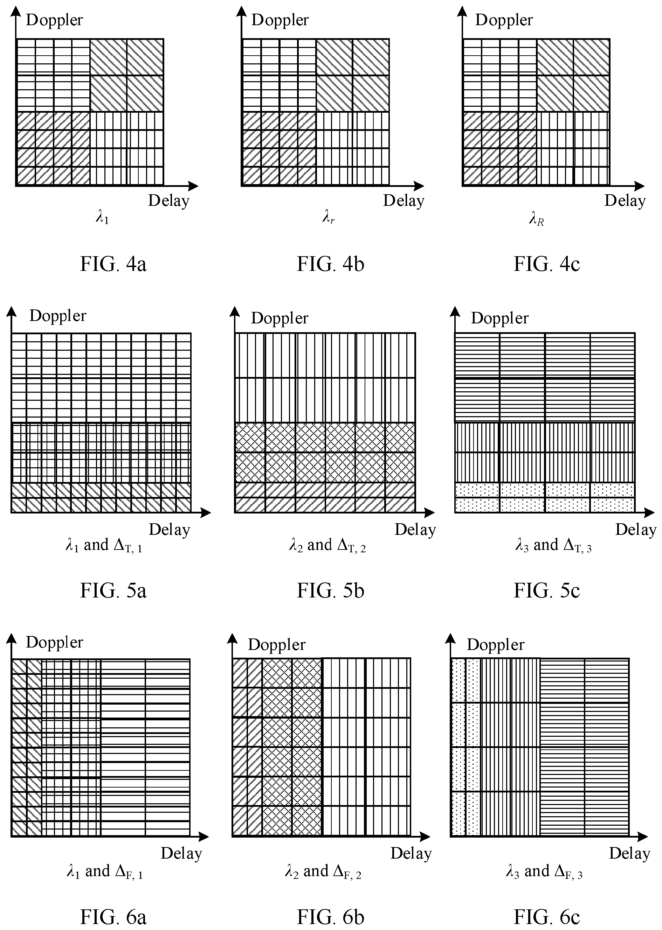

For example, $P = Q = 2$, $\Delta_{\mathrm{T},1} = \Delta_{\mathrm{T}}$, $\Delta_{\mathrm{T},2} = 2\Delta_{\mathrm{T}}$, $\Delta_{\mathrm{F},1} = \Delta_{\mathrm{F}}$, $\Delta_{\mathrm{F},2} = 2\Delta_{\mathrm{F}}$, and $\Delta_{\mathrm{T}}$ and $\Delta_{\mathrm{F}}$ are respectively a minimum unit of a round-trip time and a minimum unit of a Doppler frequency shift. FIG. 4a to FIG. 4c show a division manner of sequence sets in a delay Doppler plane. FIG. 4a, FIG. 4b, and FIG. 4c show sequence sets corresponding to different values of $\lambda_r$. It can be learned that, in Manner 2, different values of $\lambda_r$ correspond to a same sequence set division manner. In other words, a sequence set division manner does not depend on a value of the cubic term coefficient.

As shown in FIG. 4a, FIG. 4b, and FIG. 4c, a horizontal axis represents a delay domain, and a vertical axis represents a Doppler domain. Each rectangle may correspond to one sequence. An area of the rectangle may represent an area of a low ambiguity zone of the sequence. Sequences corresponding to rectangles with a same filling pattern belong to a same sequence set. A sequence set corresponding to $p = 1$ and $q = 1$ includes 16 sequences. A sequence set corresponding to $p = 2$ and $q = 1$ includes eight sequences. A sequence set corresponding to $p = 1$ and $q = 2$ includes eight sequences. A sequence set corresponding to $p = 2$ and $q = 2$ includes four sequences.

As shown in FIG. 4a, FIG. 4b, and FIG. 4c, although different sequence sets may include different quantities of sequences, each sequence set corresponds to a same total area of low ambiguity zones.

In addition, if a unit scale on the horizontal axis is $\Delta_{\mathrm{T}}$, and a unit scale on the vertical axis is $\Delta_{\mathrm{F}}$, in the example shown in FIG. 4a to FIG. 4c, when $p$ and $q$ have different values, values of $k$ and $l$ may be shown as follows:

A sequence parameter $\langle \bar{k}_1, \bar{l}_1 \rangle$ included in a sequence set corresponding to $p = 1$ and $q = 1$, that is, $\Delta_{\mathrm{T},1}, \Delta_{\mathrm{F},1}$, is: (0,0), (1,0), (2,0), (3,0), (0,1), $\langle 1,1 \rangle$, $\langle 2,1 \rangle$, $\langle 3,1 \rangle$, (0,2), (1, 2), (2,2), (3,2), (0,3), (1,3), (2,3), (3,3).

A sequence parameter $\langle \bar{k}_2, \bar{l}_1 \rangle$ included in a sequence set corresponding to $p = 2$ and $q = 1$, that is, $\Delta_{\mathrm{T},2}, \Delta_{\mathrm{F},1}$ sequence set, is: (4,0), (6,0), $\langle 4,1 \rangle$, $\langle 6,1 \rangle$, (4,2), (6,2), (4,3), (6,3).

A sequence parameter $\langle \bar{k}_1, \bar{l}_2 \rangle$ included in a sequence set corresponding to $p = 1$ and $q = 2$, that is, $\Delta_{\mathrm{T},1}, \Delta_{\mathrm{F},2}$ sequence set, is: (0,4), (1,4), (2,4), (3,4), (0,6), (1,6), (2,6), (3,6).

A sequence parameter $\langle \bar{k}_2, \bar{l}_2 \rangle$ included in a sequence set corresponding to $p = 2$ and $q = 2$, that is, $\Delta_{\mathrm{T},2}, \Delta_{\mathrm{F},2}$ sequence set, is: (4,4), (6,4), (4,6), (6,6).

Manner 2 is applicable to a scenario in which maximum round-trip times and maximum Doppler frequency shifts that correspond to a plurality of terminal devices in a cell comply with exponential distribution. In this case, the terminal device selects, with a high probability, a sequence set with a small maximum round-trip time and a small maximum Doppler frequency shift, the sequence set with a small maximum round-trip time and a small maximum Doppler frequency shift includes a large quantity of sequences, and different terminal devices select a same sequence with close probabilities.

Manner 3: In the $P \times Q$ sequence sets, sequences in any sequence set correspond to a same cubic term coefficient, and the cubic term coefficient is related to a maximum round-trip time corresponding to the sequence set. For example, sequences in the first sequence set correspond to a same cubic term coefficient, and the cubic term coefficient is related to the first maximum round-trip time.

In other words, a cubic term coefficient of a sequence is associated with a maximum round-trip time. For example, the $P$ candidate maximum round-trip times may be in one-to-one correspondence with $P$ cubic term coefficients, and different candidate maximum round-trip times correspond to different cubic term coefficients.

When the cubic term coefficient is associated with the maximum round-trip time, a plurality of sequence sets corresponding to a same candidate maximum round-trip time have a same cubic term coefficient. For example, if a plurality of second sequence sets in the $P \times Q$ sequence sets correspond to a same cubic term coefficient, the plurality of second sequence sets correspond to a same candidate maximum round-trip time.

In addition, a plurality of sequence sets corresponding to a same candidate maximum round-trip time include a same quantity of sequences. For example, if the plurality of second sequence sets in the $P \times Q$ sequence sets correspond to the same candidate maximum round-trip time, the plurality of second sequence sets include a same quantity of sequences.

For example, in the $P \times Q$ sequence sets, a quantity $\Omega_{p,q}$ of sequences included in the sequence set corresponding to the $p^{\text{th}}$ candidate maximum round-trip time $\Delta_{\text{T},p}$ is:

$$\Omega_{p,q} = \left\lfloor N/\Delta_{\text{T},p} \right\rfloor \cdot \left\lfloor N\bigg/\sum_{q=1}^{Q} \Delta_{\text{F},q} \right\rfloor \quad (9)$$

$N$ represents the sequence length of the cubic polynomial exponential sequence. $\Delta_{\text{F},q}$ represents the $q^{\text{th}}$ candidate maximum Doppler frequency shift. $p \in \{1, 2,..., P\}$. $q \in \{1, 2, ... , Q\}$. The operator $\lfloor \cdot \rfloor$ represents rounding down. The operator $\sum \cdot$ represents accumulation.

In addition, in Manner 3, the $\Omega_{p,q}$ cubic polynomial exponential sequences $s_{p,q}(n)$ included in the sequence set corresponding to the $p^{\text{th}}$ candidate maximum round-trip time $\Delta_{\text{T},p}$ and the $q^{\text{th}}$ candidate maximum Doppler frequency shift $\Delta_{\text{F},q}$ are expressed as:

$$s_{p,q}(n) = e^{-j2\pi\left(\lambda_p n^3 + 3\lambda_p \bar{k}_p n^2 + \bar{l}_q n\right)/N} \quad (10),$$

where

$$\bar{k}_p = k\Delta_{\text{T},p};$$

and

$$\bar{l}_q = l\Delta_{\text{F},q} + \left\lfloor N\bigg/\sum_{i=1}^{P} \Delta_{\text{T},i} \right\rfloor \cdot \sum_{i=1}^{p} \Delta_{\text{T},i}.$$

The sequence length $N$ of the cubic polynomial exponential sequence may be a prime number, and $n = 0, 1, ... , N\text{-}1$.

$a = \lambda = \lambda_p$, and is a cubic term coefficient of the cubic polynomial exponential sequence. $\lambda_{\text{p}} \in \{1, 2, ..., N\text{-}1\}$. $p \in \{1, 2, ..., P\}$. $\lambda_1 \neq \lambda_2 \neq \cdots \neq \lambda_P$. $\lambda_{\text{p}}$ may be understood as a cubic term coefficient associated with the $p^{\text{th}}$ candidate maximum round-trip time $\Delta_{\text{T},p}$.

$b = 3\lambda\bar{k}_p = 3\lambda_p k\Delta_{\text{T},p}$, and is a quadratic term coefficient of the cubic polynomial exponential sequence. $k \in \left\{0, 1, ..., \lfloor N/\Delta_{\text{T},p} \rfloor - 1\right\}$. In other words, $b = 3aX = 3\lambda_p k\Delta_{\text{T},p}$. $c = \bar{l}_q = \left(l\Delta_{\text{F},q} + \lfloor N/\sum_{i=1}^{P} \Delta_{\text{T},i} \rfloor \cdot \sum_{i=1}^{p} \Delta_{\text{T},i}\right)$, and is a monomial term coefficient of the cubic polynomial exponential sequence. $l \in \left\{0, 1, ..., \lfloor N/\sum_{i=1}^{Q} \Delta_{\text{F},i} \rfloor - 1\right\}$.

Optionally, parameters $\overline{k}_p$ and $\overline{l}_q$ may be associated with the sequence set and the sequence. Refer to related descriptions in Manner 1. Details are not described herein again.

For example, $P = Q = 3$, $\Delta_{T,1} = \Delta_T$, $\Delta_{T,2} = 2\Delta_T$, $\Delta_{T,3} = 3\Delta_T$, $\Delta_{F,1} = \Delta_F$, $\Delta_{F,2} = 2\Delta_F$, $\Delta_{F,3} = 3\Delta_F$, and $\Delta_T$ and $\Delta_F$ are respectively a minimum unit of a round-trip time and a minimum unit of a Doppler frequency shift. FIG. 5a to FIG. 5c show a division manner of sequence sets in a delay Doppler plane. FIG. 5a, FIG. 5b, and FIG. 5c separately show sequence sets corresponding to different values of $\lambda_p$ and different candidate maximum round-trip times $\Delta_{T,p}$.

Specifically, FIG. 5a shows a sequence set corresponding to a candidate maximum round-trip time $\Delta_{T,1}$ and $p = 1$, that is, $\lambda_1$; FIG. 5b shows a sequence set corresponding to a candidate maximum round-trip time $\Delta_{T,2}$ and $p = 2$, that is, $\lambda_2$; and FIG. 5c shows a sequence set corresponding to a candidate maximum round-trip time $\Delta_{T,3}$ and $p = 3$, that is, $\lambda_3$.

As shown in FIG. 5a, FIG. 5b, and FIG. 5c, sequence sets corresponding to a group of values of $\lambda_p$ and the candidate maximum round-trip time $\Delta_{T,p}$ include a same quantity of sequences. For example, each of three sequence sets corresponding to $\lambda_1$ and $\Delta_{T,1}$ includes 24 sequences, each of three sequence sets corresponding to $\lambda_2$ and $\Delta_{T,2}$ includes 12 sequences, and each of three sequence sets corresponding to $\lambda_3$ and $\Delta_{T,3}$ includes eight sequences.

It may be understood that the three sequence sets separately shown in FIG. 5a, FIG. 5b, and FIG. 5c jointly form $P \times Q = 9$ sequence sets in this example.

In addition, if a unit scale on a horizontal axis is $\Delta_T$, and a unit scale on a vertical axis is $\Delta_F$, in the example shown in FIG. 5a to FIG. 5c, when $p$ and $q$ have different values, values of $\overline{k}_p$ and $\overline{l}_q$ may be shown as follows:

A sequence parameter $\langle \lambda_1, \overline{k}_1, \overline{l}_1 \rangle$ included in a sequence set corresponding to $p = 1$ and $q = 1$, that is, $\Delta_{T,1}, \Delta_{F,1}$, is: $\langle \lambda_1, 0,0 \rangle, \langle \lambda_1, 1,0 \rangle, \langle \lambda_1, 2,0 \rangle, \langle \lambda_1, 3,0 \rangle, \langle \lambda_1, 4,0 \rangle, \langle \lambda_1, 5,0 \rangle, \langle \lambda_1, 6,0 \rangle, \langle \lambda_1, 7,0 \rangle, \langle \lambda_1, 8,0 \rangle, \langle \lambda_1, 9,0 \rangle, \langle \lambda_1, 10,0 \rangle, \langle \lambda_1, 11,0 \rangle, \langle \lambda_1, 0, 1 \rangle, \langle \lambda_1, 1,1 \rangle, \langle \lambda_1, 2,1 \rangle, \langle \lambda_1, 3,1 \rangle, \langle \lambda_1, 4,1 \rangle, \langle \lambda_1, 5,1 \rangle, \langle \lambda_1, 6,1 \rangle, \langle \lambda_1, 7,1 \rangle, \langle \lambda_1, 8,1 \rangle, \langle \lambda_1, 9,1 \rangle, \langle \lambda_1, 10, 1 \rangle, \langle \lambda_1, 11,1 \rangle$.

A sequence parameter $\langle \lambda_1, \overline{k}_1, \overline{l}_2 \rangle$ included in a sequence set corresponding to $p = 1$ and $q = 2$, that is, $\Delta_{T,1}, \Delta_{F,2}$, is: $\langle \lambda_1, 0,2 \rangle, \langle \lambda_1, 1, 2 \rangle, \langle \lambda_1, 2,2 \rangle, \langle \lambda_1, 3,2 \rangle, \langle \lambda_1, 4,2 \rangle, \langle \lambda_1, 5,2 \rangle, \langle \lambda_1, 6,2 \rangle, \langle \lambda_1, 7,2 \rangle, \langle \lambda_1, 8,2 \rangle, \langle \lambda_1, 9,2 \rangle, \langle \lambda_1, 10,2 \rangle, \langle \lambda_1, 11, 2 \rangle, \langle \lambda_1, 0,4 \rangle, \langle \lambda_1, 1,4 \rangle, \langle \lambda_1, 2,4 \rangle, \langle \lambda_1, 3,4 \rangle, \langle \lambda_1, 4,4 \rangle, \langle \lambda_1, 5,4 \rangle, \langle \lambda_1, 6,4 \rangle, \langle \lambda_1, 7,4 \rangle, \langle \lambda_1, 8,4 \rangle, \langle \lambda_1, 9,4 \rangle, \langle \lambda_1, 10,4 \rangle, \langle \lambda_1, 11,4 \rangle$.

A sequence parameter $\langle \lambda_1, \overline{k}_1, \overline{l}_3 \rangle$ included in a sequence set corresponding to $p = 1$ and $q = 3$, that is, $\Delta_{T,1}, \Delta_{F,3}$, is: $\langle \lambda_1, 0,6 \rangle, \langle \lambda_1, 1,6 \rangle, \langle \lambda_1, 2,6 \rangle, \langle \lambda_1, 3,6 \rangle, \langle \lambda_1, 4,6 \rangle, \langle \lambda_1, 5,6 \rangle, \langle \lambda_1, 6,6 \rangle, \langle \lambda_1, 7,6 \rangle, \langle \lambda_1, 8,6 \rangle, \langle \lambda_1, 9,6 \rangle, \langle \lambda_1, 10,6 \rangle, \langle \lambda_1, 11,6 \rangle, \langle \lambda_1, 0,9 \rangle, \langle \lambda_1, 1,9 \rangle, \langle \lambda_1, 2,9 \rangle, \langle \lambda_1, 3,9 \rangle, \langle \lambda_1, 4,9 \rangle, \langle \lambda_1, 5,9 \rangle, \langle \lambda_1, 6,9 \rangle, \langle \lambda_1, 7,9 \rangle, \langle \lambda_1, 8,9 \rangle, \langle \lambda_1, 9,9 \rangle, \langle \lambda_1, 10,9 \rangle, \langle \lambda_1, 11,9 \rangle$.

A sequence parameter $\langle \lambda_2, \overline{k}_2, \overline{l}_1 \rangle$ included in a sequence set corresponding to $p = 2$ and $q = 1$, that is, $\Delta_{T,2}, \Delta_{F,1}$, is: $\langle \lambda_2, 0,0 \rangle, \langle \lambda_2, 2,0 \rangle, \langle \lambda_2, 4,0 \rangle, \langle \lambda_2, 6,0 \rangle, \langle \lambda_2, 8,0 \rangle, \langle \lambda_2, 10,0 \rangle, \langle \lambda_2, 0, 1 \rangle, \langle \lambda_2, 2,1 \rangle, \langle \lambda_2, 4,1 \rangle, \langle \lambda_2, 6,1 \rangle, \langle \lambda_2, 8,1 \rangle, \langle \lambda_2, 10, 1 \rangle$.

A sequence parameter $\langle \lambda_2, \overline{k}_2, \overline{l}_2 \rangle$ included in a sequence set corresponding to $p = 2$ and $q = 2$, that is, $\Delta_{T,2}, \Delta_{F,2}$, is: $\langle \lambda_2, 0,2 \rangle, \langle \lambda_2, 2,2 \rangle, \langle \lambda_2, 4,2 \rangle, \langle \lambda_2, 6,2 \rangle, \langle \lambda_2, 8,2 \rangle, \langle \lambda_2, 10,2 \rangle, \langle \lambda_2, 0,4 \rangle, \langle \lambda_2, 2,4 \rangle, \langle \lambda_2, 4,4 \rangle, \langle \lambda_2, 6,4 \rangle, \langle \lambda_2, 8,4 \rangle, \langle \lambda_2, 10,4 \rangle$.

A sequence parameter $\langle \lambda_2, \overline{k}_2, \overline{l}_3 \rangle$ included in a sequence set corresponding to $p = 2$ and $q = 3$, that is, $\Delta_{T,2}, \Delta_{F,3}$, is: $\langle \lambda_2, 0,6 \rangle, \langle \lambda_2, 2,6 \rangle, \langle \lambda_2, 4,6 \rangle, \langle \lambda_2, 6,6 \rangle, \langle \lambda_2, 8,6 \rangle, \langle \lambda_2, 10,6 \rangle, \langle \lambda_2, 0,9 \rangle, \langle \lambda_2, 2,9 \rangle, \langle \lambda_2, 4,9 \rangle, \langle \lambda_2, 6,9 \rangle, \langle \lambda_2, 8,9 \rangle, \langle \lambda_2, 10,9 \rangle$.

A sequence parameter $\langle \lambda_3, \overline{k}_3, \overline{l}_1 \rangle$ included in a sequence set corresponding to $p = 3$ and $q = 1$, that is, $\Delta_{T,3}, \Delta_{F,1}$, is: $\langle \lambda_3, 0,0 \rangle, \langle \lambda_3, 3,0 \rangle, \langle \lambda_3, 6,0 \rangle, \langle \lambda_3, 9,0 \rangle, \langle \lambda_3, 0, 1 \rangle, \langle \lambda_3, 3,1 \rangle, \langle \lambda_3, 6,1 \rangle, \langle \lambda_3, 9,1 \rangle$.

A sequence parameter $\langle \lambda_3, \overline{k}_3, \overline{l}_2 \rangle$ included in a sequence set corresponding to $p = 3$ and $q = 2$, that is, $\Delta_{T,3}, \Delta_{F,2}$, is: $\langle \lambda_3, 0,2 \rangle, \langle \lambda_3, 3,2 \rangle, \langle \lambda_3, 6,2 \rangle, \langle \lambda_3, 9,2 \rangle, \langle \lambda_3, 0,4 \rangle, \langle \lambda_3, 3,4 \rangle, \langle \lambda_3, 6,4 \rangle, \langle \lambda_3, 9,4 \rangle$.

A sequence parameters $\langle \lambda_3, \overline{k}_3, \overline{l}_3 \rangle$ included in a sequence set corresponding to $p = 3$ and $q = 3$, that is, $\Delta_{T,3}, \Delta_{F,3}$, is: $\langle \lambda_3, 0,6 \rangle, \langle \lambda_3, 3,6 \rangle, \langle \lambda_3, 6,6 \rangle, \langle \lambda_3, 9,6 \rangle, \langle \lambda_3, 0,9 \rangle, \langle \lambda_3, 3,9 \rangle, \langle \lambda_3, 6,9 \rangle, \langle \lambda_3, 9,9 \rangle$.

Manner 3 is applicable to a scenario in which maximum round-trip times corresponding to a plurality of terminal devices in a cell comply with exponential distribution, and maximum Doppler frequency shifts corresponding to the plurality of terminal devices in the cell comply with uniform distribution. In this case, the terminal device selects, with a high probability, a sequence set with a small maximum round-trip time, the sequence set with a small maximum round-trip time includes a large quantity of sequences, and different terminal devices select a same sequence with close probabilities.

Manner 4: In the $P \times Q$ sequence sets, sequences in any sequence set correspond to a same cubic term coefficient, and the cubic term coefficient is related to a maximum Doppler frequency shift corresponding to the sequence set. For example, a cubic term coefficient corresponding to a sequence in the first sequence set is related to the first maximum Doppler frequency shift.

In other words, a cubic term coefficient of a sequence is associated with a maximum Doppler frequency shift. For example, the $Q$ candidate maximum Doppler frequency shifts may be in one-to-one correspondence with $Q$ cubic term coefficients, and different candidate maximum Doppler frequency shifts correspond to different cubic term coefficients.

When the cubic term coefficient is associated with the maximum Doppler frequency shift, a plurality of sequence sets corresponding to a same candidate maximum Doppler frequency shift have a same cubic term coefficient. For example, if a plurality of third sequence sets in the $P \times Q$ sequence sets correspond to a same cubic term coefficient, the plurality of third sequence sets correspond to a same candidate maximum Doppler frequency shift.

In addition, a plurality of sequence sets corresponding to a same candidate maximum Doppler frequency shift include a same quantity of sequences. For example, if the plurality of third sequence sets in the $P \times Q$ sequence sets correspond to a same candidate maximum Doppler frequency shift, the plurality of third sequence sets include a same quantity of sequences.

For example, in the $P \times Q$ sequence sets, a quantity $\Omega_{p,q}$ of sequences included in the sequence set corresponding to the $q^{th}$ candidate maximum Doppler frequency shift $\Delta_{F,q}$ is:

$$\Omega_{p,q} = \lfloor N/\Delta_{F,q} \rfloor \cdot \left\lfloor N / \sum_{p=1}^{P} \Delta_{T,p} \right\rfloor \quad (11)$$

$N$ represents the sequence length of the cubic polynomial exponential sequence. $\Delta_{T,p}$ represents the $p^{th}$ candidate maximum round-trip time. $p \in \{1, 2, ..., P\}$. $q \in \{1, 2, ..., Q\}$. The operator $\lfloor \cdot \rfloor$ represents rounding down. The operator $\sum \cdot$ represents accumulation.

In addition, in Manner 4, the $\Omega_{p,q}$ cubic polynomial exponential sequences $s_{p,q}(n)$ included in the sequence set corresponding to the $p^{th}$ candidate maximum round-trip time $\Delta_{T,p}$ and the $q^{th}$ candidate maximum Doppler frequency shift $\Delta_{F,q}$ are expressed as:

$$s_{p,q}(n) = e^{-j2\pi\left(\lambda_q n^3 + 3\lambda_p \bar{k}_p n^2 + \bar{l}_q n\right)/N} \quad (12),$$

where

$$\bar{k}_p = k\Delta_{T,p} + \left\lfloor N/\sum_{i=1}^{P} \Delta_{T,i} \right\rfloor \cdot \sum_{i=1}^{p} \Delta_{T,i};$$

and

$$\bar{l}_q = l\Delta_{F,q}.$$

The sequence length $N$ of the cubic polynomial exponential sequence may be a prime number, and $n = 0, 1, ..., N-1$.

$a = \lambda = \lambda_q$, and is a cubic term coefficient of the cubic polynomial exponential sequence. $\lambda_q \in \{1, 2, ..., N-1\}$. $q \in \{1, 2, ..., Q\}$. $\lambda_1 \neq \lambda_2 \neq \cdots \neq \lambda_Q$. $\lambda_q$ may be understood as a cubic term coefficient associated with the $q^{th}$ candidate maximum Doppler frequency shift $\Delta_{F,q}$. $b = 3\lambda\bar{k}_p = 3\lambda_r\left(k\Delta_{T,p} + \left\lfloor N/\sum_{i=1}^{P} \Delta_{T,i} \right\rfloor \cdot \sum_{i=1}^{p} \Delta_{T,i}\right)$, and is a quadratic term coefficient of the cubic polynomial exponential sequence. $k \in \left\{0, 1, ..., \left\lfloor N/\sum_{p=1}^{P} \Delta_{T,p} \right\rfloor - 1\right\}$. In other words, $b = 3aX = 3\lambda_r\left(k\Delta_{T,p} + \left\lfloor N/\sum_{i=1}^{P} \Delta_{T,i} \right\rfloor \cdot \sum_{i=1}^{p} \Delta_{T,i}\right)$.

$c = \bar{l}_q = l\Delta_{F,q}$, and is a monomial term coefficient of the cubic polynomial exponential sequence. $l \in \left\{0, 1, ..., \left\lfloor N/\Delta_{F,q} \right\rfloor - 1\right\}$.

Optionally, parameters $\bar{k}_p$ and $\bar{l}_q$ may be associated with the sequence set and the sequence. Refer to related descriptions in Manner 1. Details are not described herein again.

For example, $P = Q = 3$, $\Delta_{T,1} = \Delta_T$, $\Delta_{T,2} = 2\Delta_T$, $\Delta_{T,3} = 3\Delta_T$, $\Delta_{F,1} = \Delta_F$, $\Delta_{F,2} = 2\Delta_F$, $\Delta_{F,3} = 3\Delta_F$, and $\Delta_T$ and $\Delta_F$ are respectively a minimum unit of a round-trip time and a minimum unit of a Doppler frequency shift. FIG. 6a to FIG. 6c show a division manner of sequence sets in a delay Doppler plane. FIG. 6a, FIG. 6b, and FIG. 6c separately show sequence sets corresponding to different values of $\lambda_q$ and different candidate maximum Doppler frequency shifts $\Delta_{F,q}$.

Specifically, FIG. 6a shows a sequence set corresponding to a candidate maximum Doppler frequency shift $\Delta_{F,1}$ and $q = 1$, that is, $\lambda_1$; FIG. 6b shows a sequence set corresponding to a candidate maximum Doppler frequency shift $\Delta_{F,2}$ and $q = 2$, that is, $\lambda_2$; and FIG. 6c shows a sequence set corresponding to a candidate maximum Doppler frequency shift $\Delta_{F,3}$ and $q = 3$, that is, $\lambda_3$.

As shown in FIG. 6a, FIG. 6b, and FIG. 6c, sequence sets corresponding to a group of values of $\lambda_q$ and the candidate maximum Doppler frequency shift $\Delta_{F,q}$ include a same quantity of sequences. For example, each of three sequence sets corresponding to $\lambda_1$ and $\Delta_{F,1}$ includes 24 sequences, each of three sequence sets corresponding to $\lambda_2$ and $\Delta_{F,2}$ includes 12 sequences, and each of three sequence sets corresponding to $\lambda_3$ and $\Delta_{F,3}$ includes eight sequences.

It may be understood that the three sequence sets separately shown in FIG. 6a, FIG. 6b, and FIG. 6c jointly form $P \times Q = 9$ sequence sets in this example.

In addition, if a unit scale on a horizontal axis is $\Delta_T$, and a unit scale on a vertical axis is $\Delta_F$, in the example shown in FIG. 6a to FIG. 6c, when $p$ and $q$ have different values, values of $\bar{k}_p$ and $\bar{l}_q$ may be shown as follows:

A sequence parameter $\langle \lambda_1, \bar{k}_1, \bar{l}_1 \rangle$ included in a sequence set corresponding to p = 1 and q = 1, that is, $\Delta_{T,1}, \Delta_{F,1}$, is:

$\langle\lambda_1, 0,0\rangle, \langle\lambda_1, 1,0\rangle, \langle\lambda_1, 0, 1\rangle, \langle\lambda_1, 1,1\rangle, \langle\lambda_1, 0,2\rangle, \langle\lambda_1, 1, 2\rangle, \langle\lambda_1, 0,3\rangle, \langle\lambda_1, 1,3\rangle, \langle\lambda_1, 0,4\rangle, \langle\lambda_1, 1,4\rangle, \langle\lambda_1, 0,5\rangle, \langle\lambda_1, 1,5\rangle, \langle\lambda_1, 0,6\rangle, \langle\lambda_1, 1,6\rangle, \langle\lambda_1, 0,7\rangle, \langle\lambda_1, 1,7\rangle, \langle\lambda_1, 0,8\rangle, \langle\lambda_1, 1,8\rangle, \langle\lambda_1, 0,9\rangle, \langle\lambda_1, 1,9\rangle, \langle\lambda_1, 0, 10\rangle, \langle\lambda_1, 1,10\rangle, \langle\lambda_1, 0, 11\rangle, \langle\lambda_1, 1,11\rangle$

A sequence parameter $\langle\lambda_1, \overline{k}_2, \overline{l}_1\rangle$ included in a sequence set corresponding to p = 2 and q = 1, that is, $\Delta_{T,2}, \Delta_{F,1}$, is:
$\langle\lambda_1, 2,0\rangle, \langle\lambda_1, 4,0\rangle, \langle\lambda_1, 2,1\rangle, \langle\lambda_1, 4,1\rangle, \langle\lambda_1, 2,2\rangle, \langle\lambda_1, 4,2\rangle, \langle\lambda_1, 2,3\rangle, \langle\lambda_1, 4,3\rangle, \langle\lambda_1, 2,4\rangle, \langle\lambda_1, 4,4\rangle, \langle\lambda_1, 2,5\rangle, \langle\lambda_1, 4,5\rangle, \langle\lambda_1, 2,6\rangle, \langle\lambda_1, 4,6\rangle, \langle\lambda_1, 2,7\rangle, \langle\lambda_1, 4,7\rangle, \langle\lambda_1, 2,8\rangle, \langle\lambda_1, 4,8\rangle, \langle\lambda_1, 2,9\rangle, \langle\lambda_1, 4,9\rangle, \langle\lambda_1, 2,10\rangle, \langle\lambda_1, 4,10\rangle, \langle\lambda_1, 2,11\rangle, \langle\lambda_1, 4,11\rangle$.

A sequence parameter $\langle\lambda_1, \overline{k}_3, \overline{l}_1\rangle$ included in a sequence set corresponding to p = 3 and q = 1, that is, $\Delta_{T,3}, \Delta_{F,1}$, is:
$\langle\lambda_1, 6,0\rangle, \langle\lambda_1, 9,0\rangle, \langle\lambda_1, 6,1\rangle, \langle\lambda_1, 9,1\rangle, \langle\lambda_1, 6,2\rangle, \langle\lambda_1, 9,2\rangle, \langle\lambda_1, 6,3\rangle, \langle\lambda_1, 9,3\rangle, \langle\lambda_1, 6,4\rangle, \langle\lambda_1, 9,4\rangle, \langle\lambda_1, 6,5\rangle, \langle\lambda_1, 9,5\rangle, \langle\lambda_1, 6,6\rangle, \langle\lambda_1, 9,6\rangle, \langle\lambda_1, 6,7\rangle, \langle\lambda_1, 9,7\rangle, \langle\lambda_1, 6,8\rangle, \langle\lambda_1, 9,8\rangle, \langle\lambda_1, 6,9\rangle, \langle\lambda_1, 9,9\rangle, \langle\lambda_1, 6,10\rangle, \langle\lambda_1, 9,10\rangle, \langle\lambda_1, 6,11\rangle, \langle\lambda_1, 9,11\rangle$.

A sequence parameter $\langle\lambda_2, \overline{k}_1, \overline{l}_2\rangle$ included in a sequence set corresponding to p = 1 and q = 2, that is, $\Delta_{T,1}, \Delta_{F,2}$, is:
$\langle\lambda_2, 0,0\rangle, \langle\lambda_2, 1,0\rangle, \langle\lambda_2, 0,2\rangle, \langle\lambda_2, 1, 2\rangle, \langle\lambda_2, 0,4\rangle, \langle\lambda_2, 1,4\rangle, \langle\lambda_2, 0,6\rangle, \langle\lambda_2, 1,6\rangle, \langle\lambda_2, 0,8\rangle, \langle\lambda_2, 1,8\rangle, \langle\lambda_2, 0, 10\rangle, \langle\lambda_2, 1,10\rangle$.

A sequence parameter $\langle\lambda_2, \overline{k}_2, \overline{l}_2\rangle$ included in a sequence set corresponding to p = 2 and q = 2, that is, $\Delta_{T,2}, \Delta_{F,2}$, is:
$\langle\lambda_2, 2,0\rangle, \langle\lambda_2, 4,0\rangle, \langle\lambda_2, 2,2\rangle, \langle\lambda_2, 4,2\rangle, \langle\lambda_2, 2,4\rangle, \langle\lambda_2, 4,4\rangle, \langle\lambda_2, 2,6\rangle, \langle\lambda_2, 4,6\rangle, \langle\lambda_2, 2,8\rangle, \langle\lambda_2, 4,8\rangle, \langle\lambda_2, 2,10\rangle, \langle\lambda_2, 4,10\rangle$.

A sequence parameter $\langle\lambda_2, \overline{k}_3, \overline{l}_2\rangle$ included in a sequence set corresponding to p = 3 and q = 2, that is, $\Delta_{T,3}, \Delta_{F,2}$, is:
$\langle\lambda_2, 6,0\rangle, \langle\lambda_2, 9,0\rangle, \langle\lambda_2, 6,2\rangle, \langle\lambda_2, 9,2\rangle, \langle\lambda_2, 6,4\rangle, \langle\lambda_2, 9,4\rangle, \langle\lambda_2, 6,6\rangle, \langle\lambda_2, 9,6\rangle, \langle\lambda_2, 6,8\rangle, \langle\lambda_2, 9,8\rangle, \langle\lambda_2, 6,10\rangle, \langle\lambda_2, 9,10\rangle$.

A sequence parameter $\langle\lambda_3, \overline{k}_1, \overline{l}_3\rangle$ included in a sequence set corresponding to p = 1 and q = 3, that is, $\Delta_{T,1}, \Delta_{F,2}$, is:
$\langle\lambda_3, 0,0\rangle, \langle\lambda_3, 1,0\rangle, \langle\lambda_3, 0,3\rangle, \langle\lambda_3, 1,3\rangle, \langle\lambda_3, 0,6\rangle, \langle\lambda_3, 1,6\rangle, \langle\lambda_3, 0,9\rangle, \langle\lambda_3, 1,9\rangle$.

A sequence parameter $\langle\lambda_3, \overline{k}_2, \overline{l}_3\rangle$ included in a sequence set corresponding to p = 2 and q = 3, that is, $\Delta_{T,2}, \Delta_{F,3}$, is:
$\langle\lambda_3, 2,0\rangle, \langle\lambda_3, 4,0\rangle, \langle\lambda_3, 2,3\rangle, \langle\lambda_3, 4,3\rangle, \langle\lambda_3, 2,6\rangle, \langle\lambda_3, 4,6\rangle, \langle\lambda_3, 2,9\rangle, \langle\lambda_3, 4,9\rangle$.

A sequence parameter $\langle\lambda_3, \overline{k}_3, \overline{l}_3\rangle$ included in a sequence set corresponding to p = 3 and q = 3, that is, $\Delta_{T,3}, \Delta_{F,3}$, is:
$\langle\lambda_3, 6,0\rangle, \langle\lambda_3, 9,0\rangle, \langle\lambda_3, 6,3\rangle, \langle\lambda_3, 9,3\rangle, \langle\lambda_3, 6,6\rangle, \langle\lambda_3, 9,6\rangle, \langle\lambda_3, 6,9\rangle, \langle\lambda_3, 9.9\rangle$.

Manner 4 is applicable to a scenario in which maximum round-trip times corresponding to a plurality of terminal devices in a cell are in uniform distribution, and maximum Doppler frequency shifts corresponding to the plurality of terminal devices in the cell are in exponential distribution. In this case, the terminal device selects, with a high probability, a sequence set with a small maximum Doppler frequency shift, the sequence set with a small maximum Doppler frequency shift includes a large quantity of sequences, and different terminal devices select a same sequence with close probabilities.

Optionally, after receiving the first information of the network device and selecting the first maximum round-trip time and the first maximum Doppler frequency shift, the terminal device may determine the first sequence set in one of the foregoing four manners, and then sends the first sequence in the first sequence set. For example, the sequence set division manner used by the terminal device may be configured by the network device, or may be predefined in a protocol. This is not specifically limited in this application.

The foregoing uses an example in which the sequence set division manner provided in this application is applied to a communication scenario for description. In addition, the sequence set division manner may also be applied to a sensing scenario. For example, after the network device indicates a plurality of candidate maximum round-trip times and a plurality of candidate maximum Doppler frequency shifts, the terminal device may select one candidate maximum round-trip time and one candidate maximum Doppler frequency shift based on an environment in which the terminal device is located or a sensing requirement, determine a sequence set based on the candidate maximum round-trip time and the candidate maximum Doppler frequency shift that are selected by the terminal device, and send a sequence in the sequence set by using a sensing signal.

For example, if the terminal device is in a home environment, because a distance between objects in the home environment is short and a moving speed is low, the terminal device may select a small candidate maximum round-trip time and a small candidate maximum Doppler frequency shift. If the terminal device is located on a highspeed roadside, the terminal device may select a large candidate maximum round-trip time and a large candidate maximum Doppler frequency shift.

For example, a product of the candidate maximum round-trip time selected by the terminal device and the speed of light may be understood as a maximum distance that can be sensed by the terminal device, and the candidate maximum Doppler frequency shift selected by the terminal device may indicate a maximum moving speed that can be sensed by the terminal device.

In a monostatic sensing scenario, the terminal device may further receive an echo signal obtained after a sensing signal is reflected by a target object, to sense a location, a moving speed, and the like of the target object based on the echo signal. In a bistatic sensing scenario, after the terminal device sends a sensing signal, another device (for example, the network device or another terminal device) may receive the sensing signal reflected by a target object, to sense a location, a moving speed, and the like of the target object based on the received signal.

In addition, the sequence set division manner provided in this application may also be appropriately transformed to be applicable to a ZC sequence. For example, the network device may also indicate a plurality of candidate maximum round-trip times and a plurality of candidate maximum Doppler frequency shifts. The terminal device selects one candidate maximum round-trip time and one candidate maximum Doppler frequency shift from the plurality of candidate maximum round-trip times and the plurality of candidate maximum Doppler frequency shifts, and determines a ZC sequence based on the candidate maximum round-trip time and the candidate maximum Doppler frequency shift that are selected by the terminal device.

It may be understood that, in the foregoing embodiments, the method and/or steps implemented by the terminal device may be alternatively implemented by a component (for example, a processor, a chip, a chip system, a circuit, a logical module, or software) that may be used in the terminal device, and the method and/or steps implemented by the network device may be alternatively implemented by a component (for example, a processor, a chip, a chip system, a circuit, a logical module, or software) that may be used in the network device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

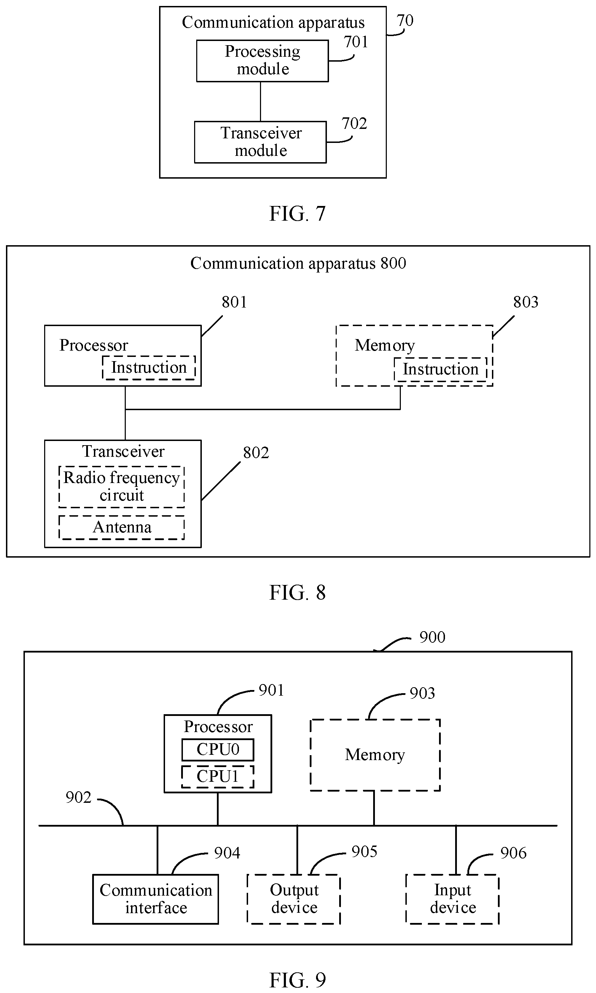

FIG. 7 is a diagram of a structure of a communication apparatus 70. The communication apparatus 70 includes a processing module 701 and a transceiver module 702. The communication apparatus 70 may be configured to implement functions of the terminal device or the network device.

In some embodiments, the communication apparatus 70 may further include a storage module (not shown in FIG. 7) configured to store program instructions and data.

In some embodiments, the transceiver module 702 may also be referred to as a transceiver unit configured to implement a sending function and/or a receiving function. The transceiver module 702 may include a transceiver circuit, a transceiver machine, a transceiver, or a communication interface.

In some embodiments, the transceiver module 702 may include a receiving module and a sending module, respectively configured to perform receiving steps and sending steps performed by the terminal device or the network device in the foregoing method embodiments, and/or configured to support another process of the technology described in this specification. The processing module 701 may be configured to perform processing (for example, determining) steps performed by the terminal device or the network device in the foregoing method embodiments, and/or configured to support another process of the technology described in this specification.

When the communication apparatus 70 is configured to implement functions of the terminal device,
the transceiver module 8702 is configured to receive first information, where the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers; and the transceiver module 702 is further configured to send a first sequence, where the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the $Q$ candidate maximum Doppler frequency shifts.

Optionally, the transceiver module 702 is further configured to receive a first signal, where the first maximum round-trip time is related to signal quality of the first signal.

Optionally, the first maximum Doppler frequency shift is related to a moving speed of the terminal device.

When the communication apparatus 70 is configured to implement functions of the network device,
the transceiver module 702 is configured to send first information, where the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers; the transceiver module 702 is further configured to receive a first sequence from the terminal device, where the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the $Q$ candidate maximum Doppler frequency shifts; and the processing module 701 is configured to determine a round-trip time and/or a Doppler frequency shift of the terminal device based on the first sequence.

All related content of the steps in the foregoing method embodiments may be cited in function descriptions of the corresponding functional modules. Details are not described herein again.

In this application, the communication apparatus 70 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 70 in FIG. 7 is a chip or a chip system, a function/an implementation process of the transceiver module 702 may be implemented by an input/output interface (or a communication interface) of the chip or the chip system, and a function/an implementation process of the processing module 701 may be implemented by a processor (or a processing circuit) of the chip or the chip system.

The communication apparatus 70 provided in this embodiment may perform the foregoing method. Therefore, for technical effects that can be achieved by the communication apparatus 70, refer to the foregoing method embodiments. Details are not described herein again.

In a possible product form, the terminal device or the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

In another possible product form, the terminal device or the network device in embodiments of this application may be implemented by a general bus architecture. For ease of description, FIG. 8 is a diagram of a structure of a communication apparatus 800 according to an embodiment of this application. The communication apparatus 800 includes a processor 801 and a transceiver 802. The communication apparatus 800 may be a terminal device, or a chip or a chip system in the terminal device. Alternatively, the communication apparatus 800 may be a network device, or a chip or a module in the network device. FIG. 8 shows only main components of the communication apparatus 800. In addition to the processor 801 and the transceiver 802, the communication apparatus may further include a memory 803 and an input/output apparatus (not shown in the figure).

Optionally, the processor 801 is mainly configured to: process a communication protocol and communication data, control the entire communication apparatus, execute a software program, and process data of the software program, so as to implement the method provided in the foregoing method embodiments. The memory 803 is mainly configured to store the software program and the data. The transceiver 802 may include a radio frequency circuit and an antenna. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display screen, or a keyboard, is mainly configured to: receive data input by a user and output data to the user.

Optionally, the processor 801, the transceiver 802, and the memory 803 may be connected through a communication bus.

After the communication apparatus is powered on, the processor 801 may read the software program in the memory 803, interpret and execute instructions of the software program, and process the data of the software program. When data needs to be sent in a wireless manner, the processor 801 performs baseband processing on the to-be-sent data, and then outputs a baseband signal to the radio frequency circuit; and the radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 801; and the processor 801 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 70 may be in a form of the communication apparatus 800 shown in FIG. 8.

In an example, a function/an implementation process of the processing module 701 in FIG. 7 may be implemented by the processor 801 in the communication apparatus 800 shown in FIG. 8 by invoking computer-executable instructions stored in the memory 803. A function/an implementation process of the transceiver module 702 in FIG. 7 may be implemented by the transceiver 802 in the communication apparatus 800 shown in FIG. 8.

In still another possible product form, the network device or the terminal device in this application may use a composition structure shown in FIG. 9, or include components shown in FIG. 9. FIG. 9 is a diagram of composition of a communication apparatus 900 according to this application. The communication apparatus 900 may be a terminal device, or a chip or a system-on-a-chip in the terminal device; or may be a network device, or a module, a chip, or a system-on-a-chip in the network device.

As shown in FIG. 9, the communication apparatus 900 includes at least one processor 901 and at least one communication interface (in FIG. 9, an example in which one communication interface 904 and one processor 901 are included is used only for description). Optionally, the communication apparatus 900 may further include a communication bus 902 and a memory 903.

The processor 901 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 901 may be another apparatus having a processing function, for example, a circuit, a component, or a software module. This is not limited.

The communication bus 902 is configured to connect different components in the communication apparatus 900, so that communication can be performed between different components. The communication bus 902 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used to represent the bus in FIG. 9, but this does not mean that there is only one bus or only one type of bus.

The communication interface 904 is configured to communicate with another device or a communication network. For example, the communication interface 904 may be a module, a circuit, a transceiver, or any apparatus that can implement communication. Optionally, the communication interface 904 may alternatively be an input/output interface located in the processor 901, and is configured to implement signal input and signal output of the processor.

The memory 903 may be an apparatus having a storage function, and is configured to store instructions and/or data. The instructions may be computer programs.

For example, the memory 903 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, or another magnetic storage device. This is not limited.

It should be noted that the memory 903 may exist independently of the processor 901, or may be integrated with the processor 901. The memory 903 may be located in the communication apparatus 900, or may be located outside the communication apparatus 900. This is not limited. The processor 901 may be configured to execute the instructions stored in the memory 903, to implement the method provided in the foregoing embodiments of this application.

In an optional implementation, the communication apparatus 900 further includes an output device 905 and an input device 906. The output device 905 communicates with the processor 901, and may display information in a plurality of manners. For example, the output device 905 may be a liquid crystal display (liquid crystal display, LCD), a light-emitting diode (light-emitting diode, LED) display device, a cathode ray tube (cathode ray tube, CRT) display device, a projector (projector), or the like. The input device 906 communicates with the processor 901, and may receive an input from a user in a plurality of manners. For example, the input device 906 may be a mouse, a keyboard, a touchscreen device, a sensor device, or the like.

In some embodiments, in terms of hardware implementation, a person skilled in the art may figure out that the communication apparatus 70 shown in FIG. 7 may be in a form of the communication apparatus 900 shown in FIG. 9.

In an example, a function/an implementation process of the processing module 701 in FIG. 7 may be implemented by the processor 901 in the communication apparatus 900 shown in FIG. 9 by invoking computer-executable instructions stored in the memory 903. A function/an implementation process of the transceiver module 702 in FIG. 7 may be implemented by the communication interface 904 in the communication apparatus 900 shown in FIG. 9.

It should be noted that the structure shown in FIG. 9 does not constitute a specific limitation on the terminal device or the network device. For example, in some other embodiments of this application, the terminal device or the network device may include more or fewer components than those shown in the figure, or some components may be combined, or some components may be divided, or different component arrangements may be used. The components shown in the figure may be implemented by hardware, software, or a combination of software and hardware.

In some embodiments, an embodiment of this application further provides a communication apparatus. The communication apparatus includes a processor configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. It is clear that the communication apparatus may not include a memory.

In another possible implementation, the communication apparatus further includes an interface circuit. The interface circuit is a code/data read/write interface circuit. The interface circuit is configured to: receive computer-executable instructions (where the computer-executable instructions are stored in the memory, and may be directly read from the memory, or may be read via another component) and send the computer-executable instructions to the processor.

In still another possible implementation, the communication apparatus further includes a communication interface. The communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and method described in this application may alternatively be implemented in another manner. For example, the foregoing apparatus embodiments are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, in other words, may be located in one position, or may be distributed on a plurality of network units. The components displayed as units may or may not be physical units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

**EP 4 787 802 A1**

Although this application is described with reference to specific features and embodiments thereof, it is clear that various modifications and combinations may be made thereto without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations provided that these modifications and variations of this application fall within the scope of the claims of this application and equivalent technologies thereof.

**Claims**

1.   A communication method, wherein the method comprises:

receiving first information, wherein the first information indicates $P$ candidate maximum round-trip times and $Q$ candidate maximum Doppler frequency shifts, the $P$ candidate maximum round-trip times and the Q candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers; and
sending a first sequence, wherein the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the $Q$ candidate maximum Doppler frequency shifts.

2.   The method according to claim 1, wherein the method further comprises: receiving a first signal, wherein the first maximum round-trip time is related to signal quality of the first signal.

3.   The method according to claim 1 or 2, wherein the first maximum Doppler frequency shift is related to a moving speed of a terminal device.

4.   A communication method, wherein the method comprises:

sending first information, wherein the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, a cubic term coefficient of the cubic polynomial exponential sequence is associated with a quadratic term coefficient of the cubic polynomial exponential sequence, and $P$ and $Q$ are positive integers;
receiving a first sequence from a terminal device, wherein the first sequence belongs to a first sequence set in the $P \times Q$ sequence sets, the first sequence set corresponds to a first maximum round-trip time and a first maximum Doppler frequency shift, the first maximum round-trip time is one of the $P$ candidate maximum round-trip times, and the first maximum Doppler frequency shift is one of the Q candidate maximum Doppler frequency shifts; and
determining a round-trip time and/or a Doppler frequency shift of the terminal device based on the first sequence.

5.   The method according to any one of claims 1 to 4, wherein low ambiguity zones corresponding to different sequence sets in the $P \times Q$ sequence sets do not overlap each other, and/or low ambiguity zones of different sequences in a same sequence set do not overlap each other.

6.   The method according to any one of claims 1 to 5, wherein sequences in different sequence sets in the $P \times Q$ sequence sets do not overlap each other.

7.   The method according to any one of claims 1 to 6, wherein in the $P \times Q$ sequence sets, a cubic polynomial exponential sequence in a sequence set corresponding to a $p^{\text{th}}$ candidate maximum round-trip time $\Delta_{\text{T},p}$ and a $q^{\text{th}}$ candidate maximum Doppler frequency shift $\Delta_{\text{F},q}$ may be expressed as:

$$s_{p,q}(n) = e^{-j2\pi(\lambda n^3 + 3\lambda \bar{k}_p n^2 + \bar{l}_q n)/N}, \text{wherein } n = 0, 1, ..., N-1,$$

wherein

$\lambda$ is a cubic term coefficient of the cubic polynomial exponential sequence, $3\lambda\bar{k}_p$ is a quadratic term coefficient of the cubic polynomial exponential sequence, $\bar{l}_q$ is a monomial term coefficient of the cubic polynomial exponential sequence, and a sequence length $N$ of the cubic polynomial exponential sequence is a prime number, p E $\{1,2,\dots,P\}, q \neq \{1,2,\dots,Q\}$, $k_{1,\dots}^* N_2 \neq \dots \neq \bar{k}_P$, and $\bar{l}_1 \neq \bar{l}_2 \neq \dots \neq \bar{l}_Q$.

8. The method according to any one of claims 1 to 7, wherein a quantity $\Omega_{p,q}$ of sequences comprised in each of the $P \times Q$ sequence sets is:

$$\Omega_{p,q} = R \cdot \lfloor N/\Sigma_{p=1}^{P}\Delta_{\mathrm{T},p}\rfloor \cdot \lfloor N/\Sigma_{q=1}^{Q}\Delta_{\mathrm{F},q}\rfloor,$$

wherein

$N$ represents the sequence length of the cubic polynomial exponential sequence, $\Delta_{\mathrm{T},p}$ represents the $p^{\mathrm{th}}$ candidate maximum round-trip time, $\Delta_{\mathrm{F},q}$ represents the $q^{\mathrm{th}}$ candidate maximum Doppler frequency shift, R represents a quantity of candidate cubic term coefficients, $p \in \{1, 2, \dots, P\}$, $q \in \{1, 2, \dots, Q\}$, the operator $\lfloor \cdot \rfloor$ represents rounding down, and the operator $\Sigma \cdot$ represents accumulation.

9. The method according to claim 8, wherein the $\Omega_{p,q}$ cubic polynomial exponential sequences $s_{p,q}(n)$ comprised in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ are expressed as:

$$s_{p,q}(n) = e^{-j2\pi[\lambda_r n^3 + 3\lambda_r(k\Delta_{\mathrm{T},p}+\lfloor N/\Sigma_{i=1}^{P}\Delta_{\mathrm{T},i}\rfloor\cdot\Sigma_{i=1}^{p}\Delta_{\mathrm{T},i})n^2 + (l\Delta_{\mathrm{F},q}+\lfloor N/\Sigma_{i=1}^{P}\Delta_{\mathrm{T},i}\rfloor\cdot\Sigma_{i=1}^{p}\Delta_{\mathrm{T},i})n]/N},$$

wherein $n = 0,1, \dots, N$ - 1, wherein

the sequence length $N$ of the cubic polynomial exponential sequence is a prime number, $\lambda_r$ is a cubic term coefficient of the cubic polynomial exponential sequence, $\lambda_r \in \{1, 2, \dots, N - 1\}$, $r \in \{1, 2, \dots, R\}$, $\lambda_1 \neq \lambda_2 \neq \dots \neq \lambda_R$, $3\lambda_r(k\Delta_{\mathrm{T},p} + \lfloor N/\Sigma_{i=1}^{P}\Delta_{\mathrm{T},i}\rfloor \cdot \Sigma_{i=1}^{p}\Delta_{\mathrm{T},i})$ is a quadratic term coefficient of the cubic polynomial exponential sequence, $k \in \{0, 1, \dots, \lfloor N/\Sigma_{i=1}^{P}\Delta_{\mathrm{T},i}\rfloor - 1\}$, $(l\Delta_{\mathrm{F},q} + \lfloor N/\Sigma_{i=1}^{P}\Delta_{\mathrm{T},i}\rfloor \cdot \Sigma_{i=1}^{p}\Delta_{\mathrm{T},i})$ is a monomial term coefficient of the cubic polynomial exponential sequence, and $l \in \{0, 1, \dots, \lfloor N/\Sigma_{i=1}^{Q}\Delta_{\mathrm{F},i}\rfloor - 1\}$.

10. The method according to any one of claims 1 to 7, wherein in the $P \times Q$ sequence sets, a quantity $\Omega_{p,q}$ of sequences comprised in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ is:

$$\Omega_{p,q} = R \cdot \lfloor N/P\Delta_{\mathrm{T},p}\rfloor \cdot \lfloor N/Q\Delta_{\mathrm{F},q}\rfloor,$$

wherein

$N$ represents the sequence length of the cubic polynomial exponential sequence, R represents a quantity of candidate cubic term coefficients, $p \in \{1, 2, \dots, P\}$, $q \in \{1, 2, \dots, Q\}$, and the operator $\lfloor \cdot \rfloor$ represents rounding down.

11. The method according to any one of claims 1 to 7 and 10, wherein each of the $P \times Q$ sequence sets corresponds to a same total area of low ambiguity zones.

12. The method according to claim 10 or 11, wherein the $\Omega_{p,q}$ cubic polynomial exponential sequences $s_{p,q}(n)$ comprised in the sequence set corresponding to the $p^{\mathrm{th}}$ candidate maximum round-trip time $\Delta_{\mathrm{T},p}$ and the $q^{\mathrm{th}}$ candidate maximum Doppler frequency shift $\Delta_{\mathrm{F},q}$ are expressed as:

$$s_{p,q}(n) = e^{-j2\pi[\lambda_r n^3 + 3\lambda_r(k\Delta_{\mathrm{T},p}+\lfloor N/P\rfloor\cdot p-\lfloor N/P\rfloor)n^2 + (l\Delta_{\mathrm{F},q}+\lfloor N/Q\rfloor\cdot q-\lfloor N/Q\rfloor)n]/N}$$, wherein $n = 0, 1, \dots, N$ - 1, wherein

the sequence length $N$ of the cubic polynomial exponential sequence is a prime number, $\lambda_r$ is a cubic term coefficient of the cubic polynomial exponential sequence, $\lambda_r \in \{1, 2, \dots, N - 1\}$, $r \in \{1, 2, \dots, R\}$, $\lambda_1 \neq \lambda_2 \neq \dots \neq \lambda_R$, $3\lambda_r(k\Delta_{\mathrm{T},p} + \lfloor N/P\rfloor \cdot p - \lfloor N/P\rfloor)$ is a quadratic term coefficient of the cubic polynomial exponential sequence, $k \in \{0, 1, \dots, \lfloor N/P\Delta_{\mathrm{T},p}\rfloor - 1\}$, $(l\Delta_{\mathrm{F},q} + \lfloor N/Q\rfloor \cdot q - \lfloor N/Q\rfloor)$ is a monomial term coefficient of the cubic polynomial exponential sequence, and $l \in \left\{0, 1, ..., \lfloor N/Q\Delta_{F,q} \rfloor - 1\right\}$.

13. The method according to any one of claims 1 to 7, wherein sequences in any one of the $P \times Q$ sequence sets correspond to a same cubic term coefficient.

14. The method according to any one of claims 1 to 7 and 13, wherein a cubic term coefficient corresponding to a sequence in the first sequence set is related to the first maximum round-trip time.

15. The method according to claim 13 or 14, wherein in the $P \times Q$ sequence sets, a plurality of second sequence sets correspond to a same cubic term coefficient, and the plurality of second sequence sets correspond to a same candidate maximum round-trip time.

16. The method according to any one of claims 13 to 15, wherein in the $P \times Q$ sequence sets, a quantity $\Omega_{p,q}$ of sequences comprised in the sequence set corresponding to the $p^{th}$ candidate maximum round-trip time $\Delta_{T,p}$ is:

$$\Omega_{p,q} = \lfloor N/\Delta_{T,p} \rfloor \cdot \lfloor N/\Sigma_{q=1}^{Q} \Delta_{F,q} \rfloor,$$

wherein
$N$ represents the sequence length of the cubic polynomial exponential sequence, $\Delta_{F,q}$ represents the $q^{th}$ candidate maximum Doppler frequency shift, $p \in \{1, 2, ..., P\}$, $q \in \{1, 2, ..., Q\}$, the operator $\lfloor \cdot \rfloor$ represents rounding down, and the operator $\Sigma\cdot$ represents accumulation.

17. The method according to any one of claims 14 to 16, wherein the $\Omega_{p,q}$ cubic polynomial exponential sequences $s_{p,q}(n)$ comprised in the sequence set corresponding to the $p^{th}$ candidate maximum round-trip time $\Delta_{T,p}$ and the $q^{th}$ candidate maximum Doppler frequency shift $\Delta_{F,q}$ are expressed as:

$s_{p,q}(n) = e^{-j2\pi[\lambda_p n^3 + 3\lambda_p k\Delta_{T,p} n^2 + (l\Delta_{F,q} + \lfloor N/\Sigma_{i=1}^{P} \Delta_{T,i} \rfloor \cdot \Sigma_{i=1}^{p} \Delta_{T,i})n]/N}$, wherein $n = 0, 1, ..., N - 1$, wherein

the sequence length $N$ of the cubic polynomial exponential sequence is a prime number, $\lambda_p$ is a cubic term coefficient of the cubic polynomial exponential sequence, $\lambda_p \in \{1, 2, ..., N - 1\}$, $p \in \{1, 2, ..., P\}$, $\lambda_1 \neq \lambda_2 \neq \cdots \neq \lambda_p$, $3\lambda_p k\Delta_{T,p}$ is a quadratic term coefficient of the cubic polynomial exponential sequence, $k \in \left\{0, 1, ..., \lfloor N/\Delta_{T,p} \rfloor - 1\right\}$, $\left(l\Delta_{F,q} + \lfloor N/\Sigma_{i=1}^{P} \Delta_{T,i} \rfloor \cdot \Sigma_{i=1}^{p} \Delta_{T,i}\right)$ is a monomial term coefficient of the cubic polynomial exponential sequence, and $l \in \left\{0, 1, ..., \lfloor N/\Sigma_{i=1}^{Q} \Delta_{F,i} \rfloor - 1\right\}$.

18. The method according to any one of claims 1 to 7 and 13, wherein a cubic term coefficient corresponding to a sequence in the first sequence set is related to the first maximum Doppler frequency shift.

19. The method according to claim 13 or 18, wherein in the $P \times Q$ sequence sets, a plurality of third sequence sets correspond to a same cubic term coefficient, and the plurality of third sequence sets correspond to a same candidate maximum Doppler frequency shift.

20. The method according to any one of claims 13, 18, and 19, wherein in the $P \times Q$ sequence sets, a quantity $\Omega_{p,q}$ of sequences comprised in the sequence set corresponding to the $q^{th}$ candidate maximum Doppler frequency shift $\Delta_{F,q}$ is:

$$\Omega_{p,q} = \lfloor N/\Delta_{F,q} \rfloor \cdot \lfloor N/\Sigma_{p=1}^{P} \Delta_{T,p} \rfloor,$$

wherein
$N$ represents the sequence length of the cubic polynomial exponential sequence, $\Delta_{T,p}$ represents the $p^{th}$ candidate maximum round-trip time, $p \in \{1, 2, ..., P\}$, $q \in \{1, 2, ..., Q\}$, the operator $\lfloor \cdot \rfloor$ represents rounding down, and the operator $\Sigma\cdot$ represents accumulation.

21. The method according to any one of claims 18 to 20, wherein the $\Omega_{p,q}$ cubic polynomial exponential sequences $s_{p,q}(n)$ comprised in the sequence set corresponding to the $p^{th}$ candidate maximum round-trip time $\Delta_{T,p}$ and the $q^{th}$ candidate maximum Doppler frequency shift $\Delta_{F,q}$ are expressed as:

$$\Omega_{p,q}(n) = e^{-j2\pi[\lambda_q n^3 + 3\lambda_r(k\Delta_{T,p} + \lfloor N/\sum_{i=1}^P \Delta_{T,i} \rfloor \cdot \sum_{i=1}^p \Delta_{T,i})n^2 + l\Delta_{F,q}n]/N}$$ , wherein $n = 0, 1, \ldots, N - 1$, wherein

the sequence length $N$ of the cubic polynomial exponential sequence is a prime number, $\lambda_q$ is a cubic term coefficient of the cubic polynomial exponential sequence, $\lambda_q \in \{1, 2, \ldots, N - 1\}$, $q \in \{1, 2, \ldots, Q\}$, $\lambda_1 \neq \lambda_2 \neq \cdots \neq \lambda_Q$, $3\lambda_r\left(k\Delta_{T,p} + \lfloor N/\sum_{i=1}^P \Delta_{T,i} \rfloor \cdot \sum_{i=1}^p \Delta_{T,i}\right)$ is a quadratic term coefficient of the cubic polynomial exponential sequence, $k \in \left\{0, 1, \ldots, \lfloor N/\sum_{p=1}^P \Delta_{T,p} \rfloor - 1\right\}$, $l\Delta_{F,q}$ is a monomial term coefficient of the cubic polynomial exponential sequence, and $l \in \left\{0, 1, \ldots, \lfloor N/\Delta_{F,q} \rfloor - 1\right\}$.

22. A communication apparatus, comprising a unit configured to perform the method according to any one of claims 1 to 3 and claims 5 to 21, or comprising a unit configured to perform the method according to any one of claims 4 to 21.

23. A communication apparatus, wherein the communication apparatus comprises a processor, and the processor is configured to run a computer program or instructions, to cause the communication apparatus to perform the method according to any one of claims 1 to 3 and claims 5 to 21, or to cause the communication apparatus to perform a unit in the method according to any one of claims 4 to 21.

24. A computer-readable storage medium, wherein the computer-readable storage medium stores computer instructions or a program, and when the computer instructions or the program is run on a computer, the method according to any one of claims 1 to 3 and claims 5 to 21 is performed, or the method according to any one of claims 4 to 21 is performed.

25. A computer program product, wherein the computer program product comprises computer instructions, and when a part or all of the computer instructions are run on a computer, the method according to any one of claims 1 to 3 and claims 5 to 21 is performed, or the method according to any one of claims 4 to 21 is performed.

FIG. 1

| Terminal device | | Network device |
|---|---|---|

S201: First information, where the first information indicates $P$ candidate maximum round-trip times and $Q$ candidate maximum Doppler frequency shifts, the $P$ candidate maximum round-trip times and the $Q$ candidate maximum Doppler frequency shifts correspond to $P \times Q$ sequence sets, a sequence in the sequence set is a cubic polynomial exponential sequence, and a cubic term coefficient of the cubic polynomial exponential sequence is associated with a quadratic term coefficient

S202: First sequence, where the first sequence belongs to a first sequence set in the $P \times Q$ sequence sets, and the first sequence set corresponds to a first candidate maximum round-trip time and a first candidate maximum Doppler frequency shift

S203: Determine a round-trip time and/or a Doppler frequency shift of the terminal device based on the first sequence

FIG. 2

FIG. 3a

FIG. 3b

FIG. 3c

FIG. 4a   FIG. 4b   FIG. 4c

FIG. 5a   FIG. 5b   FIG. 5c

FIG. 6a   FIG. 6b   FIG. 6c

Communication apparatus 70

Processing module 701

Transceiver module 702

FIG. 7

Communication apparatus 800

Processor 801

Instruction

Memory 803

Instruction

Transceiver 802

Radio frequency circuit

Antenna

FIG. 8

900

Processor 901

CPU0

CPU1

Memory 903

902

Communication interface 904

Output device 905

Input device 906

FIG. 9

## INTERNATIONAL SEARCH REPORT

| International application No. |
| --- |
| **PCT/CN2023/124096** |

**A. CLASSIFICATION OF SUBJECT MATTER**

H04L 43/0864(2022.01)i; H04W74/08(2024.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: 最大, 往返时延, 多普勒频移, 多项式, 候选, 接入, 上行随机接入, 系数, ZC, 序列, 集合, max+, round-trip delay, Doppler frequency shift, candidate, coefficient, Zadoff-Chu, sequence, random access, set

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015184977 A1 (HUAWEI TECHNOLOGIES CO., LTD.) 10 December 2015 (2015-12-10) <br> description, page 1, line 30 to page 6, line 21 | 1-25 |
| A | CN 103346829 A (PEKING UNIVERSITY) 09 October 2013 (2013-10-09) <br> entire document | 1-25 |
| A | CN 107078985 A (HUAWEI TECHNOLOGIES CO., LTD.) 18 August 2017 (2017-08-18) <br> entire document | 1-25 |
| A | CN 109874168 A (SUN YAT-SEN UNIVERSITY et al.) 11 June 2019 (2019-06-11) <br> entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 June 2024** | **24 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124096**

| Patent document cited in search report | | | Publication date (day/month/year) | Patent family member(s) | | | Publication date (day/month/year) |
|---|---|---|---|---|---|---|---|
| WO | 2015184977 | A1 | 10 December 2015 | CN | 105830521 | A | 03 August 2016 |
| | | | | EP | 3142448 | A1 | 15 March 2017 |
| | | | | US | 2017086228 | A1 | 23 March 2017 |
| | | | | JP | 2017523653 | A | 17 August 2017 |
| | | | | JP | 2018088718 | A | 07 June 2018 |
| | | | | EP | 3404860 | A1 | 21 November 2018 |
| | | | | CN | 109167646 | A | 08 January 2019 |
| | | | | US | 2020112998 | A1 | 09 April 2020 |
| | | | | CN | 111314013 | A | 19 June 2020 |
| | | | | CN | 112235875 | A | 15 January 2021 |
| CN | 103346829 | A | 09 October 2013 | None | | | |
| CN | 107078985 | A | 18 August 2017 | EP | 4195604 | A1 | 14 June 2023 |
| | | | | EP | 3709588 | A1 | 16 September 2020 |
| | | | | JP | 2018530239 | A | 11 October 2018 |
| | | | | WO | 2017049639 | A1 | 30 March 2017 |
| | | | | EP | 3349408 | A1 | 18 July 2018 |
| | | | | ES | 2828925 | T3 | 28 May 2021 |
| | | | | US | 2020092919 | A1 | 19 March 2020 |
| | | | | RU | 2677640 | C1 | 18 January 2019 |
| | | | | US | 2018242370 | A1 | 23 August 2018 |
| | | | | JP | 2020043569 | A | 19 March 2020 |
| | | | | CN | 111511040 | A | 07 August 2020 |
| | | | | CN | 111542126 | A | 14 August 2020 |
| | | | | JP | 2022070947 | A | 13 May 2022 |
| CN | 109874168 | A | 11 June 2019 | None | | | |

Form PCT/ISA/210 (patent family annex) (July 2022)